# EUROPEAN PATENT APPLICATION

(11) **EP 4 234 233 A1**
(43) Date of publication of application: **30.08.2023**
(21) Application number: 21885764.7
(22) Date of filing: 22.09.2021
(51) Int. Cl.: B32B 27/18, B32B 27/36, B32B 27/40, C09D 5/00, C09J 11/06, C09D 167/00, C09D 175/04, C09J 175/04, C09K 3/16, C09D 7/40, C09J 7/35, C08J 7/043

(54) **HIGHLY ADHESIVE POLYESTER FILM**

(30) Priority: 26.10.2020 JP 2020178772; 05.03.2021 JP 2021035453; 16.03.2021 JP 2021042376
(71) Applicant: TOYOBO CO., LTD., Osaka-shi Osaka 5300001 (JP)
(72) Inventor: KUMAGAI Eiji, Otsu-shi, Shiga 520-0292 (JP); YAMAGUCHI Yohei, Otsu-shi, Shiga 520-0292 (JP); KUBO Takeshi, Otsu-shi, Shiga 520-0292 (JP); TAKAGI Noriyuki, Otsu-shi, Shiga 520-0292 (JP); OHTA Tsuyoshi, Otsu-shi, Shiga 520-0292 (JP)
(74) Representative: Vossius & Partner Patentanwälte Rechtsanwälte mbB
(86) International application number: PCT/JP2021/034743
(87) International publication number: WO 2022/091645

(57) **Abstract**

Provided is a readily adhesive polyester film that has excellent antistatic properties, that prevents an antistatic agent in a readily adhesive layer from transferring to other items that the readily adhesive layer is in contact with or to the back side of the film itself, and has a readily adhesive layer that has excellent adhesion with, for example, ultraviolet (UV) curable ink used in printing. The readily adhesive polyester film includes a polyester film and a readily adhesive layer on at least one surface of the polyester film, wherein the readily adhesive layer is formed of a cured composition containing an ion-conducting antistatic agent, a polyester resin, and a polycarbonate urethane resin, a surface of the readily adhesive layer has a surface specific resistance value of 1.0×10¹³Ω/sq or lower, and after the surface of the readily adhesive layer is brought into contact with an additional polyester film and maintained at a temperature of 50°C under a pressure of 1 kg/cm² for 3 days, the surface of the additional polyester film that is in contact with the surface of the readily adhesive layer has a surface specific resistance value of 1.0×10¹⁴ Ω/sq or higher.

## Description

### Technical Field

The present invention relates to a cavity-containing polyester film that is has excellent mass productivity, concealment properties, and whiteness, and is excellent in easy adhesion and antistatic properties. More specifically, the present invention relates to a readily adhesive polyester film that can decrease the transfer of an antistatic agent to other items or to the back side of the film, and that is excellent in ink adhesion and suitable for use in recording materials or printing materials, a film to which a water-based flexographic ink is readily adhesive, and a readily adhesive polyester film for use in in-mold labeling.

### Background Art

Due the their excellent properties such as mechanical properties, electrical properties, and dimensional stability, biaxially stretched polyester films have been used in substrate films in many printing fields, such as labels, tags, IC cards, magnetic recording materials, packaging materials, electrically insulating materials, photosensitive materials, drawing materials, and photographic materials. In particular, such films for use in labels are provided with inorganic vapor deposition on the side opposite to the readily adhesive layer in order to increase concealment properties, adhesive processing for adhesion to containers or other items, or a mold-releasing agent such as silicone for use in separators.

Additionally, in-mold process has been known as a method of integrally molding containers or other items from a synthetic resin. Although polyethylene and polypropylene resins are well known as such synthetic resins, polyester resin molded articles have also been proposed from an environmental viewpoint. Copolyester resins (Unipet) and copolyesters containing 1,4-cyclohexanedimethanol (PETG) having processing properties closer to polyvinyl chloride (PVC) as a copolymer component are broadly known.

There have been proposed various labels using such polyester films for use in the in-mold process with polyester resins. However, methods including coating or laminating an adhesive layer to adhere the adhesive layer to a molded article increase environmental loads and production costs due to increased processing steps.

Additionally, due to their high insulation properties, problems often arise during printing in polyester films in these applications, such as missing ink due to dust adsorption caused by static electricity during running operation steps, or poor handling due to adsorption between films caused by frictional electrification.

One of the known methods for imparting readily adhesive antistatic properties to the surface of a polyester film is to apply a resin of a wide range to the surface of a polyester film to provide a coating layer having readily adhesive performance and antistatic performance.

A method of providing a coating layer of a specific resin to the surface of a polyester film substrate is often used also in various conventional polyester-based coating layers for ink adhesion (see, for example, PTL 1). Examples of resins constituting the coating layer include a single resin selected from a polyester resin, a polyurethane resin, and an acrylic resin; a mixture of two or more of these resins; and a mixture of one or more of these resins with a specific crosslinking agent (e.g., melamine and isocyanates).

Studies also report that antistatic performance can also be achieved in a uniaxially stretched laminated polyester film by mixing a polymeric antistatic agent and additives (see PTL 2 and 3).

To impart antistatic functionality, antistatic agents containing a polar group are used. Of these, due to their high polarity, cationic antistatic agents and anionic antistatic agents among ion-conducting antistatic agents are known to be usable for the effect of decreasing surface specific resistance values. However, when mixed with polyester resins or polyurethane resins as described above, such antistatic agents with a high polar group and high hydrophilicity may cause gelation due to ion adsorption (interaction) caused by the difference in polarity (functional group), and this may result in failure to prepare a coating liquid.

Additionally, such conventional techniques have a drawback; for example, components contained in the surface of films or in the coating layer may transfer to the back side due to indoor high temperature and high humidity, especially in film rolls in summer, or during storage or land or marine transportation of cut sheets. Transfer to the back side is unlikely to occur in normal temperature and humidity environments; however, this probably occurs when temperature and humidity exceed a certain temperature and humidity range to increase the moisture content in the atmosphere, and the components of a coating film soften and transfer to the back side. This phenomenon lowers the functionality of the coating layer. In particular, an antistatic agent component transferred to the back side causes defects such as vapor deposition defects (pinholes) in vapor-deposition processing performed in the following step, a crawling phenomenon due to poor appearance, or poor release properties due to insufficient curing in a film provided with a release layer. Additionally, an antistatic agent component transferred to the back side may leave stains by whitening on the adhesion side of a mold during in-mold processing. Transfer of components to the back side of a polyester film containing a readily adhesive layer with adhesion and antistatic functionality (e.g., printing ink) has been very difficult to prevent. Although decreasing the pressure of winding rolls and controlling the temperature and humidity during storage are effective in avoiding this problem, these are not completely able to prevent the transfer, and may lead to lowered productivity.

A certain temperature range is, for example, data of the temperature and humidity inside containers transported by sea in summer, disclosed by the transportation industry. Although containers are sealed, the temperature rises to about 40°C at maximum. The maximum humidity also rises to 80% due to the evaporation of the moisture contained in cardboard paper used in packaging materials. Thus, in order to provide a readily adhesive polyester film that is resistant to quality change in a harsh environment, it is desirable to prevent the transfer of components in a coating layer to other items with which the coating layer is in contact or to the back side of the film itself under the evaluation conditions such as at 50°C, even under moist-heat conditions such as at a temperature of 60°C and a humidity of 90%.

For polyester films for use in recording materials or labels, various printing methods and ink are selected. Commonly used ink is UV ink, which is formed of an acrylic monomer resin crosslinked with a photoreaction catalyst. However, due to the odor and environmental impact of UV ink, water-based flexographic ink has come into general use.

Water-based flexographic ink is generally composed of a pigment, a pigment dispersion resin, water, a moisturizing agent component, and a binder resin. Of these, binder resins are added to improve the coating film resistance (water resistance, abrasion resistance, adhesion, scratch resistance, etc.) of printed items. Because of their capability of achieving the excellence of all of the coating film physical properties, ink physical properties, and printing suitability, binder resins are often used in the form of a dispersion of fine resin particles. Although such water-based flexographic ink has so far been developed mainly for substrates such as paper and cardboard, water-based flexographic ink is now required to have excellent adhesion to non-polar film substrates such as polyethylene terephthalate at low temperature under dry conditions from the viewpoint of energy saving, low cost, and a reduction of environmental load.

### Citation List

### Patent Literature

PTL 1: JPH11-105221A
PTL 2: JP2008-296447A
PTL 3: JP2010-208059A

### Summary of Invention

### Technical Problem

The present invention was made in view of the problems in prior art. Specifically, an object of the present invention is to provide a readily adhesive polyester film and a readily adhesive polyester film for use in in-mold labeling that have excellent antistatic properties in the surface of their readily adhesive layer, that prevent the transfer of an antistatic agent in the readily adhesive layer to other films that the readily adhesive layer is in contact with or to a separator sheet, an adhesive surface, or the back side (rear side) of the readily adhesive polyester film, and that have excellent adhesion in the readily adhesive layer with various inks such as ultraviolet (UV)-curable ink or water-based flexographic ink used in printing.

### Solution to Problem

Specifically, the present invention includes the following subject matter.
1. A readily adhesive polyester film comprising
   a polyester film, and
   a readily adhesive layer on at least one surface of the polyester film,
   wherein
   the readily adhesive layer is formed of a cured composition containing an ion-conducting antistatic agent, a polyester resin, and a polycarbonate urethane resin,
   a surface of the readily adhesive layer has a surface specific resistance value of 1.0×10¹³Ω/sq or lower, and
   after the surface of the readily adhesive layer is brought into contact with an additional polyester film and maintained at a temperature of 50°C under a pressure of 1 kg/cm² for 3 days, a surface of the additional polyester film that is in contact with the surface of the readily adhesive layer has a surface specific resistance value of 1.0×10¹⁴ Ω/sq or higher.
2. The readily adhesive polyester film according to Item 1, wherein
   after the surface of the readily adhesive layer is brought into contact with an additional polyester film and maintained at a temperature of 60°C and a humidity of 90% under a pressure of 1 kg/cm² for 3 days, the surface of the readily adhesive layer has a surface specific resistance value of 1.0×10¹³ Ω/sq or lower, and
   after the surface of the readily adhesive layer is brought into contact with an additional polyester film and maintained at temperature of 60°C and a humidity of 90% under a pressure of 1 kg/cm² for 2 days, a surface of the additional polyester film that is in contact with the surface of the readily adhesive layer has a surface specific resistance value of 1.0×10¹³ Ω/sq or higher.
3. The readily adhesive polyester film according to Item 1 or 2, wherein solids in the ion-conducting antistatic agent are present in an amount of 1 to 8 mass% based on 100 mass% of the total solids content in the composition.
4. The readily adhesive polyester film according to any one of Items 1 to 3, comprising a crosslinking agent in an amount of 0 to 50 mass% on a solids basis based on 100 mass% of the total solids content in the composition.
5. The readily adhesive polyester film according to any one of Items 1 to 4, wherein the readily adhesive polyester film is a polyester film to which a water-based flexographic ink is readily adhesive.
6. The readily adhesive polyester film according to any one of Items 1 to 5, which is for use in in-mold labeling.
7. The readily adhesive polyester film according to any one of Items 1 to 6, wherein the readily adhesive layer is thermally fused and adhered to a blow-molded container containing a thermoplastic resin in use.

### Advantageous Effects of Invention

The readily adhesive polyester film according to the present invention has excellent antistatic properties, prevents the transfer of an antistatic agent in a readily adhesive layer to other items or to the back side of the film at high temperature and at high humidity, and has excellent adhesion to various inks (e.g., UV curable ink and water-based flexographic ink) and in-mold containers formed of thermoplastic resin such as polyester.

### Description of Embodiments

### Polyester Film Substrate

In the present invention, the polyester resin forming a polyester film substrate can be, for example, polyethylene terephthalate, polybutylene terephthalate, polyethylene-2,6-naphthalate, polytrimethylene terephthalate, or a copolyester resin in which a portion of the diol component or dicarboxylic acid component of the polyester resin as described above is replaced by a copolymerization component. Examples of copolymerization components include diol components, such as diethylene glycol, neopentyl glycol, 1,4-cyclohexanedimethanol, and polyalkylene glycol; and dicarboxylic acid components, such as adipic acid, sebacic acid, phthalic acid, isophthalic acid, 5-sodium isophthalic acid, and 2,6-naphthalenedicarboxylic acid.

The polyester resin preferably used for the polyester film substrate in the present invention is mainly selected from polyethylene terephthalate, polytrimethylene terephthalate, polybutylene terephthalate, and polyethylene-2,6-naphthalate. Of these polyester resins, polyethylene terephthalate is most preferred from the viewpoint of the balance between physical properties and cost. The polyester film substrate formed from such a polyester resin is preferably a biaxially stretched polyester film, which can improve properties such as chemical resistance, heat resistance, and mechanical strength.

The catalyst for polycondensation used in the production of polyester resins is not particularly limited. Antimony trioxide is suitable because of its low price and excellent catalytic activity. It is also preferable to use a germanium compound or a titanium compound. More preferred examples of polycondensation catalysts include a catalyst containing aluminum and/or a compound thereof and a phenolic compound; a catalyst containing aluminum and/or a compound thereof and a phosphorus compound; and a catalyst containing an aluminum salt of a phosphorus compound.

Main raw materials for use in producing synthetic paper include polyethylene resins, polypropylene resins, and polyester resins. In particular, polyester resins such as polyethylene terephthalate have a wide range of applications due to their excellent mechanical and thermal properties.

A film with functionality similar to that of paper is generally obtained, for example, by forming a large amount of fine cavities inside a film, or treating the surface of a film to roughen the surface with sandblasting, chemical etching, or matting. Of these, the method of forming a large amount of fine cavities inside a film not only provides paper-like concealment properties and whiteness, but also reduces the weight of the film itself. Thus, the method is widely used because of advantages such as low cost per area and excellent image clarity in printing due to moderate flexibility and cushioning properties imparted to the film.

A typical method of forming fine cavities inside the film is adding an incompatible thermoplastic resin ("incompatible resin" below) to a polyester resin to obtain a sheet in which the incompatible resin is dispersed in the polyester resin, and stretching the sheet at least uniaxially to form cavities due to the interfacial delamination between the polyester resin and the incompatible resin. Preferable incompatible resins for use in forming cavities in polyester resins include polyolefin resins such as polyethylene resin, polypropylene resin, and polymethyl pentene resin, and polystyrene resin.

The polyester film substrate in the present invention is particularly preferably a biaxially oriented polyester film from the viewpoint of practicality such as strength, stiffness, and dimensional stability.

The polyester film substrate may have a single-layer structure or a laminated structure. In a preferred embodiment, the polyester film substrate has a laminated structure including layer A, layer B, and layer A in this order, with layer A containing inorganic particles, and layer B having fine cavities. The use of layer A, which contains inorganic particles, in the surface layers can improve sliding properties (i.e., handling properties) of the film, as well as concealment properties. Further, the presence of fine cavities only in layer B, which is the inner layer, can provide a preferable white appearance and ensure sufficient strength of the film surface while achieving cushioning properties of the film. The method of forming the laminated structure is not particularly limited. A method using coextrusion is preferred from the viewpoint of stability during production and processing costs.

Although the polyester film substrate in the present invention may have a monolayer or multilayer structure, some or all of the layers are preferably opaque. The optical density, which indicates the opacity of the white cavity-containing polyester film, is preferably 0.3 or higher, more preferably 0.3 to 4.0, and particularly preferably 0.5 to 3.0. An optical density of 0.3 or higher is preferable because it leads to a clear printing effect when printing is applied to the surface of the readily adhesive layer of the white cavity-containing polyester film. An optical density of 4.0 or lower is also preferable because a better printing effect is expected.

Although the method for achieving an optical density within the ranges above is not particularly limited, an optical density within the ranges above can be achieved by adding inorganic particles or a thermoplastic resin incompatible to a polyester resin to the polyester resin. Although the content of these is not particularly limited, the content of inorganic particles is preferably 5 to 35 mass%, and particularly preferably 8 to 25 mass% of the produced polyester. If an incompatible thermoplastic resin is added, the content of the incompatible thermoplastic resin is preferably 5 to 35 mass%, and particularly preferably 8 to 28 mass% of the polyester. If inorganic particles and a thermoplastic resin incompatible to a polyester resin are added in combination, the total content of these is preferably 40 mass% or lower of the polyester film substrate from the viewpoint of film strength, stiffness, and film-forming stability.

The inorganic particles for use are not particularly limited. The inorganic particles preferably have an average particle size of 0.1 to 4.0 um, and particularly preferably 0.3 to 1.5 um. Specifically, white pigments, such as titanium oxide, barium sulfate, calcium carbonate, and zinc sulfide are preferred, and these may be used in combination. Further, inorganic particles commonly contained in films, such as silica, alumina, talc, kaolin, clay, calcium phosphate, mica, hectorite, zirconia, tungsten oxide, lithium fluoride, calcium fluoride, and calcium sulfate, may also be used in combination.

Furthermore, the readily adhesive polyester film of the present invention is preferably a readily adhesive polyester film containing fine cavities with an apparent density of 0.3 to 1.3 g/cm³.

A readily adhesive white cavity-containing polyester film with a density of layered cavities of 0.20 cavities/µm or more, preferably 0.25 cavities/µm or more, and more preferably 0.30 cavities/µm or more is also preferred from the viewpoint of achieving both cushioning properties and surface peel strength. Within these ranges, the resulting readily adhesive white cavity-containing polyester film achieves excellent printing clarity and excellent processing characteristics during printing. The density of layered cavities (cavities/µm) as used herein is defined according to the following formula: the number of cavities in the thickness direction of the film (cavities)/film thickness (µm). The upper limit of the density of layered cavities is preferably 0.80 cavities/µm, and more preferably 0.55 cavities/pm, in terms of efficiency in cavity development. The density may be adjusted so as to fall within the above ranges, for example, according to the following methods: adjusting the amount, type, viscosity, etc. of the incompatible thermoplastic resin to be added; changing the screw shape of an extruder; or installing a static mixer in a molten resin flow path. However, the method is not limited to these methods.

The readily adhesive white cavity-containing polyester film is particularly useful because the fine cavities present in the film cause light scattering at the interface with the polyester (matrix), thus further increasing opacity. This makes it possible to reduce the amount of the inorganic particles to be added. In addition, the presence of fine cavities can make the film substrate itself lighter; thus, handling becomes easier, and greater economic effects, such as a reduction in costs for starting materials and transportation, are achieved.

The readily adhesive white cavity-containing polyester film as described above may be obtained according to known methods that have already been published, such as a method including kneading a thermoplastic polyester resin (matrix) with a thermoplastic resin incompatible with the polyester resin to prepare a sheet, and stretching, in at least one axial direction, the sheet having the incompatible resin in the form of fine particles dispersed in the polyester resin to thus form cavities around the fine particles of the incompatible resin.

The resulting readily adhesive white cavity-containing polyester film preferably has a thickness of 5 to 300 µm. In particular, a laminated white polyester film with a density of layered cavities of 0.20/um or more preferably has a thickness of 20 to 300 µm, and more preferably 40 to 250 µm.

The whiteness required in the film for use in printing materials can be expressed by a color value. In particular, the color L value is a measure of lightness; the higher the value, the whiter the color. A higher color b value indicates a stronger yellow color, whereas a lower color b value indicates a stronger blue color. Specifically, a high L value and a low b value mean a high degree of whiteness and strong whiteness to the eyes. This will improve the clarity in printing.

### Readily Adhesive Layer

To improve the back transfer of antistatic agents and adhesion to UV ink, water-based flexographic ink, solvent-based ink, oxidative polymerization-type ink, melt-type thermal transfer ink, and in-mold containers formed of thermoplastic resins such as polyester, a preferable embodiment of the readily adhesive polyester film of the present invention was found to be a readily adhesive polyester film having a readily adhesive layer that is laminated on at least one surface of the film, and that is formed of a cured composition containing an ion-conducting antistatic agent, a polycarbonate urethane resin, and a polyester resin. The readily adhesive layer is considered to be formed by curing of a cationic antistatic agent or anionic antistatic agent, a polycarbonate urethane resin, or a polyester resin. However, since it is difficult to describe the chemical structure after curing, this specification states that the readily adhesive layer is formed of a cured composition containing a cationic or anionic antistatic agent, a polycarbonate urethane resin, and a polyester resin. The readily adhesive layer may be formed on both surfaces of the polyester film substrate, or on only one surface of the polyester film substrate, with a coating layer of different resin formed on the other surface.

In the present invention, the surface of the readily adhesive layer of the readily adhesive polyester film preferably has antistatic properties indicated by a surface specific resistance value of 1.0×10¹³ Ω/sq or lower. The surface of the readily adhesive layer having a surface specific resistance value of 1.0×10¹³ Ω/sq or lower is preferable because it can eliminate the adsorption of dust due to static electricity caused by friction or during peeling, provide good printing quality, and prevent the dispersal of toner particles from a laser beam printer. The surface of the readily adhesive layer having a surface specific resistance value of 1.0×10¹³ Ω/sq or lower is also preferable because it can prevent the phenomena of poor handling and heavy feeding during film feeding when films adsorb to each other due to electrification. The surface of the readily adhesive layer has a surface specific resistance value of more preferably 5.0×10¹² Ω/sq or lower, and still more preferably 1.0×10¹² Ω/sq or lower. A surface specific resistance value of 1.0×10⁸ Ω/sq or higher is preferable because it prevents an overly high polarity, providing excellent ready adhesion to various inks. The surface specific resistance value is more preferably 5.0×10⁸ Ω/sq or higher, and particularly preferably 1.0×10⁹ Ω/sq or higher.

In the present invention, it is preferred that after the surface of the readily adhesive layer of the readily adhesive polyester film is brought into contact with an additional polyester film and maintained at 50°C under a pressure of 1 kg/cm² for 3 days, the surface of the readily adhesive layer has a surface specific resistance value of 1.0×10¹³ Ω/sq or lower. This means that due to the properties described above, for example, the antistatic agent present in the readily adhesive layer of a rolled-up readily adhesive polyester film is unlikely to transfer (set-off) to the back side of the film with which the antistatic agent is in contact, and that the antistatic properties of the readily adhesive layer is easily maintained. It is preferred that the surface of the readily adhesive layer after contact treatment under the specific conditions has a surface specific resistance value of 1.0×10¹³ Ω/sq or lower because it can provide durable antistatic properties. The surface of the readily adhesive layer after contact treatment under the specific conditions has a surface specific resistance value of more preferably 5.0×10¹² Ω/sq or lower, and still more preferably 1.0×10¹² Ω/sq or lower. A surface specific resistance value after contact treatment under the specific conditions of 1.0×10⁸ Ω/sq or higher is preferable because it can prevent an overly high polarity, providing excellent ready adhesion to various inks. The surface specific resistance value after contact treatment under the specific conditions is more preferably 5.0×10⁸ Ω/sq or higher, and particularly preferably 1.0×10⁹ Ω/sq or higher.

In the present invention, it is preferred that after the surface of the readily adhesive layer is brought into contact with an additional polyester film and maintained at 50°C under a pressure of 1 kg/cm² for 3 days, the surface of the additional polyester film that is in contact with the surface of the readily adhesive layer has a surface specific resistance value of 1.0×10¹⁴ Ω/sq or higher. This means that due to the properties described above, for example, the antistatic agent present in the readily adhesive layer of a rolled-up readily adhesive polyester film is unlikely to transfer (set-off) to the back side of the film with which the antistatic agent is in contact, and that the antistatic properties of the readily adhesive layer of the readily adhesive polyester film is easily maintained. It is preferred that the surface of the additional polyester film after contact treatment under the specific conditions has a surface specific resistance value of more preferably 1.0×10¹⁴ Ω/sq or higher, and still more preferably 5.0×10¹⁴ Ω/sq or higher.

In the present invention, it is preferred that after the surface of the readily adhesive layer of the readily adhesive polyester film is brought into contact with an additional polyester film and maintained at a temperature of 60°C and a humidity of 90% under a pressure of 1 kg/cm² for 3 days, the surface of the readily adhesive layer has a surface specific resistance value of 1.0×10¹³ Ω/sq or lower. In such a moist-heat environment, the antistatic agent in the readily adhesive layer tends to transfer to another surface. Thus, the surface specific resistance value of the surface of the readily adhesive layer being 1.0×10¹³ Ω/sq or lower even after adhesive treatment in the moist-heat environment above means that for example, when a rolled, readily adhesive polyester film is left in a moist-heat environment, the antistatic agent in the readily adhesive layer is unlikely to transfer (set-off) to the back side that the readily adhesive layer is in contact with, and that the antistatic properties of the readily adhesive polyester film is easily maintained. The surface of the readily adhesive layer after contact treatment in the moist-heat environment above has a surface specific resistance value of more preferably 1.0×10¹³ Ω/sq or lower, and still more preferably 9.0×10¹² Ω/sq or lower. A surface specific resistance value of 1.0×10⁸ Ω/sq or higher after contact treatment in a moist-heat environment is preferable because it can prevent an overly high polarity, providing excellent ready adhesion to various inks. The surface specific resistance value is more preferably 5.0×10⁸ Ω/sq or higher.

In the present invention, it is preferred that after the surface of the readily adhesive layer of the readily adhesive polyester film is brought into contact with an additional polyester film and maintained at a temperature of 60°C and a humidity of 90% under a pressure of 1 kg/cm² for 2 days, the surface of the additional polyester film that is in contact with the surface of the readily adhesive layer has a surface specific resistance value of 1.0×10¹³ Ω/sq or higher. In such a moist-heat environment, the antistatic agent in the readily adhesive layer tends to transfer to another surface. Thus, the surface specific resistance value of the surface of the additional polyester film that is in contact with the surface of the readily adhesive layer being 1.0×10¹³ Ω/sq or higher even after adhesive treatment in the moist-heat environment above means that, for example, when the rolled, readily adhesive polyester film is left in a moist-heat environment, the antistatic agent in the readily adhesive layer is unlikely to transfer (set-off) to the back side that the readily adhesive layer is in contact with, and that the antistatic properties of the readily adhesive polyester film is easily maintained. It is more preferred that after the surface of the readily adhesive layer of the readily adhesive polyester film is brought into contact with an additional polyester film and maintained at a temperature of 60°C and a humidity of 90% under a pressure of 1 kg/cm² for 3 days, the surface of the additional polyester film that is in contact with the surface of the readily adhesive layer has a surface specific resistance value of 1.0×10¹³ Ω/sq or higher.

In the present invention, the reason why the readily adhesive layer of the readily adhesive polyester film of the present invention is brought into contact with an additional polyester film in evaluation of the transfer of an antistatic agent is that both sides of the polyester film of the present invention can have a readily adhesive layer in an embodiment; it is difficult to accurately evaluate the transfer of the antistatic agent if the readily adhesive polyester films of the present invention are placed one over another. As described later, the additional polyester film used in this case had no readily adhesive layer.

Each of the constituents of the readily adhesive layer is described below in detail.

### Ion-conducting Antistatic Agent

The antistatic agent is preferably one that can decrease the transfer to an item or the back side of the film itself with which the antistatic agent is in contact. Examples include nonionic antistatic agents of surfactant type or polymer type with a functional group such as a sorbitan, ether, ester, sorbitol, or glucose group; cationic antistatic agents of surfactant type or polymer type with a functional group such as a quaternary ammonium salt, quaternary ammonium resin, imidazoline, arcobel, or solomin A; anionic antistatic agents of surfactant type or polymer type with a functional group such as alkyl sulfate, alkyl phosphate, a phosphoric ester salt, or a sulfuric acid ester salt; and antistatic agents of ampholytic surfactant type such as betaine, amino acid, and amino sulfuric acid ester.

The counterion of the quaternary ammonium salt group in the antistatic agents can be any anionic compound, and is preferably selected from a halogen ion, a mono- or poly-halogenated alkyl ion, a nitrate ion, a sulfate ion, an alkyl sulfate ion, a sulfonate ion, or an alkyl sulfonate ion. From the viewpoint of the stability of surface specific resistance value, coating stability, ink adhesion, and decreased transfer of an antistatic agent to other items or to the back side, ethosulfate salts are preferable.

Examples further include polyethylenimine, polydimethyldiallyl ammonium salts, polyalkylenepolyaminedicyanodiamido ammonium condensates, polyvinylpyridinium halides, quaternary ammonium salts of alkyl (meth)acrylate, quaternary ammonium salts of alkyl (meth)acrylamide, ω-chloro-poly(oxyethylene-polymethylene-alkyl quaternary ammonium salts), polyvinylbenzyltrimethylammonium salts, polystyrene-based cationic polymers, poly(meth)acrylic cationic polymers (e.g., methyl methacrylate, ethyl acrylate, 2-hydroxyethyl methacrylate, and trimethylaminoethyl methacrylate chloride), polyvinylpyridine-based polymers, cyclic integral polymers, linear integral polymers, polymers of an aromatic vinyl monomer having two or more quaternary ammonium ion groups in a pendant form, and polymers having a pyrrolidinium ring in the main chain. These polymers may be homopolymers or copolymers. Known copolymerizable monomers can be used in producing these polymers. From the viewpoint of coating liquid mixable properties and control of the amount of the antistatic agent component in the surface of the readily adhesive layer, the antistatic agent is preferably one having a linear alkyl group, and further preferably one having a linear alkyl group and a quaternary ammonium salt group.

Thus, in the antistatic agent having a linear alkyl group and a quaternary ammonium salt group, the number of carbon atoms in the alkyl chain is preferably 10 to 25, more preferably 12 to 19, and particularly preferably 14 to 18. In light of the interaction between the above molecules and prevention of back transfer due to molecular length, the above ranges are preferred.

The molecular weight of the quaternary ammonium salt group with a linear alkyl group is preferably 200 or more and 700 or less, and more preferably 400 or more and 600 or less. A molecular weight of 200 or less allows for easy expression of the surface specific resistance value, but cannot inhibit the transfer to the back side. A molecular weight of 700 or more makes it difficult for the surface specific resistance value to be expressed and tends to cause aggregation due to its interaction with resin functional groups during coating liquid preparation.

Further, in the molecular structure of the cationic antistatic agent containing nitrogen, at least one amide bond, urethane bond, or the like may be contained between the linear alkyl chain and the quaternary ammonium salt group.

### Polycarbonate Urethane Resin

The urethane resin with a polycarbonate structure in the present invention preferably contains a urethane-bond partial structure derived from at least a polycarbonate polyol component and a polyisocyanate component, and further optionally contains a chain extender. Additionally, a polyisocyanate with a branched structure is suitably introduced by forming a branched molecular chain structure after synthesis or polymerization due to the presence of three or more terminal functional groups of a starting material component of any of the above that constitutes a molecular chain.

In the polycarbonate urethane resin and the urethane resin with a branched structure in the present invention, the lower limit of the number of terminal functional groups in the molecular chain is preferably three, and more preferably four, depending on the branched structure. A number of terminal functional groups of three or greater is preferable because it can increase the blocking resistance when water adheres. In the urethane resin with a polycarbonate structure in the present invention, the upper limit of the number of terminal functional groups in the molecular chain is preferably six depending on the branched structure. A number of terminal functional groups of 6 or fewer is preferable because it allows the resin to stably disperse in an aqueous solution.

The polycarbonate polyol component for use in the synthesis or polymerization of the polycarbonate urethane resin in the present invention preferably contains an aliphatic polycarbonate polyol excellent in heat resistance and hydrolysis resistance. The aliphatic polycarbonate polyol for use includes aliphatic polycarbonate diols, and aliphatic polycarbonate triols, with aliphatic polycarbonate diols being preferable. The aliphatic polycarbonate diol for use in the synthesis or polymerization of the urethane resin with a polycarbonate structure in the present invention can be obtained, for example, by reacting one, or two or more diols such as ethylene glycol, propylene glycol, 1,3-propanediol, 1,4-butanediol, 1,5-pentanediol, 3-methyl-1,5-pentanediol, 1,6-hexanediol, 1,9-nonanediol, 1,8-nonanediol, neopentyl glycol, diethylene glycol, or dipropylene glycol with, for example, a carbonate such as dimethyl carbonate, ethylene carbonate, or phosgene.

The number average molecular weight of the polycarbonate polyol in the present invention is preferably 1000 to 3000, more preferably 1200 to 2900, and most preferably 1500 to 2800. A number average molecular weight of 1000 or more is preferable because it can improve ink adhesion. A number average molecular weight of 3000 or less is preferable because it can inhibit the back transfer of an antistatic agent.

The polyisocyanate for use in the synthesis or polymerization of the polycarbonate urethane resin in the present invention is, for example, aromatic aliphatic diisocyanates such as xylylene diisocyanate; alicyclic diisocyanates such as isophorone diisocyanate, 4,4-dicyclohexylmethane diisocyanate, and 1,3-bis(isocyanatemethyl) cyclohexane; aliphatic diisocyanates such as hexamethylene diisocyanate, and 2,2,4-trimethylhexamethylene diisocyanate; or polyisocyanates prepared by adding at least one of these compounds to trimethylolpropane. The use of aromatic aliphatic diisocyanates, alicyclic diisocyanates, or aliphatic diisocyanates is preferable because it is free of yellowing. It is also preferable because it prevents the resulting coating film from becoming too hard and provides an excellent surface specific resistance value due to an antistatic agent.

Examples of chain extenders include glycols such as ethylene glycol, diethylene glycol, 1,4-butanediol, neopentyl glycol, and 1,6-hexanediol; polyhydric alcohols such as glycerin, trimethylolpropane, and pentaerythritol; diamines such as ethylene diamine, hexamethylene diamine, and piperazine; amino alcohols such as monoethanolamine and diethanolamine; thiodiglycols such as thiodiethylene glycol; and water.

A method preferably usable for forming a branched structure in a urethane resin is, for example, a method of reacting a polycarbonate polyol component, a polyisocyanate, and a chain extender at an appropriate temperature for an appropriate period of time and adding a tri- or higher functional compound with a hydroxy group or isocyanate group to allow for further reaction.

Specific examples of tri- or higher functional hydroxy-containing compounds include caprolactone triol, glycerol, trimethylolpropane, butanetriol, hexanetriol, 1,2,3-hexanetriol, 1,2,3-pentanetriol, 1,3,4-hexanetriol, 1,3,4-pentanetriol, 1,3,5-hexanetriol, 1,3,5-pentanetriol, and polyether triol. The polyether triol is, for example, a compound obtained by performing addition polymerization of one, or two or more monomers such as ethylene oxide, propylene oxide, butylene oxide, amylene oxide, glycidyl ether, methyl glycidyl ether, t-butyl glycidyl ether, or phenyl glycidyl ether by using one, or two or more compounds having three active hydrogens such as an alcohol (e.g., glycerin or trimethylolpropane) or diethylene triamine as an initiator.

Specific examples of tri- or higher functional compounds with an isocyanate group may be a polyisocyanate compound with three or more isocyanate (NCO) groups per molecule. In the present invention, tri- or higher functional isocyanate compounds include bullets, nurates, and adducts that are obtained by modifying an isocyanate monomer with two isocyanate groups, such as aromatic diisocyanates, aliphatic diisocyanates, aromatic aliphatic diisocyanates, or alicyclic diisocyanates.

Examples of aromatic diisocyanates include 1,3-phenylene diisocyanate, 4,4'-diphenyl diisocyanate, 1,4-phenylene diisocyanate, 4,4'-diphenylmethane diisocyanate, 2,4-tolylene diisocyanate, 2,6-tolylene diisocyanate, 4,4'-toluidine diisocyanate, dianisidine diisocyanate, and 4,4'-diphenyl ether diisocyanate.

Examples of aliphatic diisocyanates include trimethylene diisocyanate, tetramethylene diisocyanate, hexamethylene diisocyanate, pentamethylene diisocyanate, 1,2-propylene diisocyanate, 2,3-butylene diisocyanate, 1,3-butylene diisocyanate, dodecamethylene diisocyanate, and 2,4,4-trimethyl hexamethylene diisocyanate.

Examples of aromatic aliphatic diisocyanates include xylylene diisocyanate, ω,ω'-diisocyanate-1,4-diethyl benzene, 1,4-tetramethyl xylylene diisocyanate, and 1,3-tetramethyl xylylene diisocyanate.

Examples of alicyclic diisocyanates include 3-isocyanatemethyl-3,5,5-trimethylcyclohexyl isocyanate (another name: IPDI, isophorone diisocyanate), 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylene bis(cyclohexylisocyanate), and 1,4-bis(isocyanatemethyl) cyclohexane.

Bullets are self-condensates with burette bonds formed by self-condensation of isocyanate monomers, such as a burette of hexamethylene diisocyanate.

Nurates are trimers of isocyanate monomers, such as hexamethylene diisocyanate trimers, isophorone diisocyanate trimers, and tolylene diisocyanate trimers.

Adducts are tri- or higher functional isocyanate compounds, which are formed by reacting an isocyanate monomer as described above with a tri- or higher functional, low-molecular-weight compound containing active hydrogen. Examples include compounds formed by reacting trimethylolpropane with hexamethylene diisocyanate, compounds formed by reacting trimethylolpropane with tolylene diisocyanate, compounds formed by reacting trimethylolpropane with xylylene diisocyanate, and compounds formed by reacting trimethylolpropane with isophorone diisocyanate.

The chain extender with three or more functional groups includes trimethylolpropane described in regards to the chain extender above, and alcohols with three or more hydroxy groups such as pentaerythritol.

The readily adhesive layer in the present invention is preferably provided according to in-line coating described later by using an aqueous coating liquid. Thus, the urethane resin of the present invention preferably has water solubility or water dispersibility. The phrase "water solubility" or "water dispersibility" means that the urethane resin can be dissolved or dispersed in water or an aqueous solution containing lower than 50 mass% of a water-soluble organic solvent.

To impart water dispersibility to the urethane resin, a sulfonic acid (salt) group or carboxylic acid (salt) group can be introduced (copolymerized) into the urethane-molecular skeleton. To maintain moisture resistance, it is preferred to introduce a carboxylic acid (salt) group (weak acid). This is also preferred because it can prevent the interaction (gelation) with a cationic antistatic agent. Additionally, a nonionic group such as polyoxyalkylene group can also be introduced.

To introduce carboxylic acid (salt) groups into a urethane resin, for example, a polyol compound with carboxylic acid groups (polyol component) such as dimethylolpropanoic acid and dimethylolbutanoic acid, is introduced as a copolymer component, and neutralization is performed with a salt-forming agent. Specific examples of salt-forming agents include trialkylamines such as ammonia, trimethylamine, triethylamine, triisopropylamine, tri-n-propyl amine, and tri-n-butylamine; N-alkyl morpholines such as N-methylmorpholine, and N-ethylmorpholine; and N-dialkylalkanolamines such as N-dimethylethanolamine, and N-diethylethanolamine. These can be used singly, or in a combination of two or more.

When a polyol compound with a carboxylic acid (salt) group is used as a copolymer component to impart water dispersibility, the compositional molar ratio of the polyol compound with a carboxylic acid (salt) group in the urethane resin is preferably 3 to 60 mol%, and preferably 5 to 40 mol%, based on 100 mol% of the entire polyisocyanate component in the urethane resin. A compositional molar ratio of 3 mol% or higher is preferable because it can provide water dispersibility. A composition molar ratio of 60 mol% or lower is preferable because it can maintain water resistance and can provide moist-heat resistance.

The urethane resin of the present invention may have a blocked isocyanate structure at the end to improve hardness.

### Crosslinking Agent

In the present invention, a blocked isocyanate as a crosslinking agent may be added to a composition for forming a readily adhesive layer. A tri- or higher functional blocked isocyanate is more preferable, and a tetra- or higher functional blocked isocyanate is particularly preferable. These isocyanates can control the antistatic properties of the surface of the readily adhesive layer and prevent the back transfer of the antistatic agent.

In order to impart water solubility or water dispersibility to the blocked isocyanate in the present invention, a precursor polyisocyanate may have a hydrophilic group introduced. The hydrophilic group includes (1) quaternary ammonium salts of dialkyl amino alcohol, and quaternary ammonium salts of dialkyl amino alkyl amine, (2) sulfonic acid salts, carboxylic acid salts, and phosphoric acid salts, and (3) polyethylene glycol or polypropylene glycol having one terminal blocked with an alkyl group. If a hydrophilic moiety is introduced, the blocked isocyanate becomes (1) cationic, (2) anionic, or (3) nonionic. In particular, anionic or nonionic blocked isocyanates are preferred because they are quite compatible with other water-soluble resins, many of which are anionic. Anionic blocked isocyanates are also preferred because they are excellent in compatibility with other resins and improve moist-heat resistance due to lack of ionic hydrophilic groups.

The anionic hydrophilic group is preferably one that has a hydroxy group for introducing a polyisocyanate and a carboxylic acid group for adding hydrophilicity. Examples include glycolic acid, lactic acid, tartaric acid, citric acid, oxybutyric acid, oxyvaleric acid, hydroxypivalic acid, dimethylol acetic acid, dimethylol propanoic acid, dimethylol butanoic acid, and polycaprolactone with a carboxylic acid group. For neutralizing carboxylic acid groups, organic amine compounds are preferable. Examples include C₁₋₂₀ linear or branched, primary, secondary, or tertiary amines such as ammonia, methylamine, ethylamine, propylamine, isopropylamine, butylamine, 2-ethylhexylamine, cyclohexylamine, dimethylamine, diethylamine, dipropylamine, diisopropylamine, dibutylamine, trimethylamine, triethylamine, triisopropylamine, tributylamine, and ethylenediamine, cyclic amines such as morpholine, N-alkyl morpholine, and pyridine, and hydroxy-containing amines such as monoisopropanolamine, methylethanolamine, methylisopropanolamine, dimethylethanolamine, diisopropanolamine, diethanolamine, triethanolamine, diethylethanolamine, and triethanolamine.

The nonionic hydrophilic group is preferably polyethylene glycol or polypropylene glycol that has one terminal blocked with an alkyl group and that has 3 to 50, more preferably 5 to 30, repeating units of ethylene oxide and/or propylene oxide. A smaller number of repeating units may result in poor compatibility with resin and increased haze, whereas a larger number of repeating units may result in decreased adhesion at high temperatures and high humidity. In order to improve water dispersibility, a nonionic, anionic, cationic, or ampholytic surfactant may be added to the blocked isocyanate of the present invention. Examples include nonionic surfactants such as polyethylene glycol, and polyhydric alcohol fatty acid ester; anionic surfactants such as fatty acid salts, alkyl sulfuric acid ester, alkyl benzenesulfonic acid salts, sulfosuccinic acid salts, and alkyl phosphoric acid salts; cationic surfactants such as alkylamine salts, and alkyl betaine; and surfactants such as carboxylic acid amine salts, sulfonic acid amine salts, and sulfuric acid ester salts.

The aqueous coating liquid may also contain a water-soluble organic solvent other than water. For example, the organic solvent used in the reaction may be added; or the organic solvent used in the reaction may be removed, and another organic solvent may be added.

As a means for improving adhesion, other disclosed compounds may be added. With the aim of improving the durability of adhesion of the readily adhesive layer, other crosslinking agents can also further improve adhesion at high temperatures and high humidity. Specific crosslinking agents include urea crosslinking agents, epoxy crosslinking agents, melamine crosslinking agents, oxazoline crosslinking agents, and carbodiimide crosslinking agents. To facilitate the crosslinking reaction, for example, a catalyst may optionally be used.

### Polyester Resin

The polyester resin used in forming the readily adhesive layer in the present invention may be linear; however, it is preferably a polyester resin containing a dicarboxylic acid and a diol having a branched structure as constituents. Examples of the dicarboxylic acid as used here include those that are mainly composed of terephthalic acid, isophthalic acid, or 2,6-naphthalenedicarboxylic acid; aliphatic dicarboxylic acids, such as adipic acid, and sebacic acid; and aromatic dicarboxylic acids, such as terephthalic acid, isophthalic acid, phthalic acid, and 2,6-naphthalenedicarboxylic acid. The branched glycol is a branched diol having an alkyl group. Examples include 2,2-dimethyl-1,3-propanediol, 2-methyl-2-ethyl-1,3-propanediol, 2-methyl-2-butyl-1,3-propanediol, 2-methyl-2-propyl-1,3-propanediol, 2-methyl-2-isopropyl-1,3-propanediol, 2-methyl-2-n-hexyl-1,3-propanediol, 2,2-diethyl-1,3-propanediol, 2-ethyl-2-n-butyl-1,3-propanediol, 2-ethyl-2-n-hexyl-1,3-propanediol, 2,2-din-butyl-1,3-propanediol, 2-n-butyl-2-propyl-1,3-propanediol, and 2,2-di-n-hexyl-1,3-propanediol.

The polyester resin can be one in which a branched glycol component that is the more preferable embodiment described above is present in an amount of preferably 10 mol% or higher, and more preferably 20 mol% or higher of the entire glycol component. A glycol component in an amount of 10 mol% or higher is preferable because it prevents overly high crystallinity and leads to excellent adhesion of the readily adhesive layer. The upper limit of the glycol component in the entire glycol component is preferably 80 mol% or lower, and more preferably 70 mass%. A glycol component in an amount of 80 mol% or lower is preferable because it decreases the oligomer concentration (byproduct) and leads to excellent transparency of the readily adhesive layer. Other than the above compounds, ethylene glycol is the most preferred glycol component. Diethylene glycol, propylene glycol, butanediol, hexanediol, or 1,4-cyclohexanedimethanol is also usable in a small amount.

The most preferable dicarboxylic acid as a constituent of the polyester resin is terephthalic acid or isophthalic acid. In addition to the above dicarboxylic acids, it is preferable to use 5-sulfoisophthalic acid or the like in the range of 1 to 10 mol% for copolymerization, in order to impart water dispersibility to the copolyester resin. Examples include sulfoterephthalic acid, 5-sulfoisophthalic acid, and 5-sodium sulfoisophthalic acid. A polyester resin containing a dicarboxylic acid with a naphthalene skeleton may be used; however, in order to limit a decrease in adhesion to UV inks, the amount thereof is preferably 5 mol% or lower of the entire carboxylic acid component, or the dicarboxylic acid with a naphthalene skeleton may not be used.

The polyester resin may contain a triol or tricarboxylic acid as a constituent to the extent that the characteristics of the polyester resin are not impaired.

The polyester resin may contain a polar group other than a carboxy group. Examples of polar groups include a sulfonic acid metal salt group, and a phosphate group. The polyester resin may contain one or more of these polar groups. An example of the method of introducing a sulfonic acid metal salt group is a method using a dicarboxylic acid or glycol containing a sulfonic acid metal salt group, such as a metal salt of 5-sulfoisophthalic acid, 4-sulfonaphthalene-2,7-dicarboxylic acid, 5[4-sulfophenoxy]isophthalic acid, or the like or a metal salt of 2-sulfo-1,4-butanediol, 2,5-dimethyl-3-sulfo-2,5-hexanediol, or the like, in an amount of 10 mol% or lower, preferably 7 mol% or lower, and more preferably 5 mol% or lower of the total polycarboxylic acid component or the total polyol component. If the content exceeds 10 mol%, the hydrolysis resistance of the resin itself and the water resistance of the coating film tend to decrease.

The resin solids concentration in a coating liquid refers to the sum of solids concentrations of a polyester resin, a urethane resin with a polycarbonate structure, and a crosslinking agent. It is preferred that the resin solids concentration in a coating liquid be adjusted to 5 to 17%. A resin solids concentration of 5% or higher is preferable because it prevents the readily adhesive layer after drying and curing from becoming overly thin, and leads to excellent ready adhesion to materials such as UV-curable ink. A resin solids concentration of 17% or lower is preferable because it provides sufficient crosslinking properties when a crosslinking agent is added, limits the transfer of an antistatic agent to other items or the back side, and limits a blocking phenomenon.

It is preferred that an ion-conducting antistatic agent be present in an amount of 1 to 8 mass% based on 100 mass% of the total solids content in a composition for forming the readily adhesive layer. An ion-conducting antistatic agent within the specified range yields antistatic performance. An ion-conducting antistatic agent in an amount within this range is also preferred because it prevents the transfer of the antistatic component to other items or the back side after heating or moist-heat treatment.

It is preferred that the urethane resin with a polycarbonate structure is present in an amount of 5 to 50 mass% based on 100 mass% of the sum of the solids contents by mass of the following three materials: the polyester resin, the urethane resin with a polycarbonate structure, and the crosslinking agent. A urethane resin with a polycarbonate structure in an amount within this range is preferable because it can achieve excellent affinity for various materials or UV ink and excellent adhesion. A urethane resin with a polycarbonate structure in an amount within this range is preferable because it can provide excellent ready adhesion and antistatic performance, and limits the transfer of an antistatic agent to other items or the back side in a moist-heat environment.

It is preferred that the upper limit of the crosslinking agent content is 50 mass% based on 100 mass% of the sum of the solids contents by mass of the following three materials: the polyester resin, the urethane resin with a polycarbonate structure, and the crosslinking agent. A crosslinking agent in an amount within this range is preferable because it increases the crosslinking properties of the readily adhesive layer, provides excellent affinity for materials such as UV ink, and makes it easy for the antistatic properties to develop. Additionally, it is also preferable because it maintains the strength of the readily adhesive layer in a moisture resistance treatment and limits the transfer of an antistatic agent to other items or the back side.

It is preferred that the polyester resin is present in an amount of 10 to 70 mass% based on 100 mass% of the sum of the solids contents by mass of the following three materials: the polyester resin, the urethane resin with a polycarbonate structure, and the crosslinking agent. A polyester resin in an amount within this range can achieve excellent affinity for various materials or UV ink and adhesion. In particular, it is also preferable because it can increase the adhesion with the polyester film substrate. It is also preferred to use a cationic antistatic agent because it can limit gelation of a coating liquid due to interaction.

### Additives

The readily adhesive layer in the present invention may contain known additives, such as surfactants, pH adjusters, antioxidants, heat resistance stabilizers, weathering stabilizers, ultraviolet absorbers, organic lubricants, pigments, dyes, organic or inorganic particles, antistatic agents, and nucleating agents, in the range in which the effects of the present invention are not impaired.

Surfactants are sometimes used with the expectation of the effects of a solubilizer, a dispersant, a defoamer, a wetting aid, etc. The hydrophilic moiety of surfactants is divided into an ionic moiety (cationic, anionic, or ampholytic) and a nonionic moiety. In the case of a water-based coating material, a surfactant is used because the polyester film for use as a substrate has low surface energy and poor wettability. Thus, a surfactant is often used as a surface tension adjustment or a wetting aid for water-based coating materials. Although it is not particularly limited, the surfactant is preferably one that can decrease the surface tension of the coating liquid to 50 dyne/cm or less, preferably 40 dyne/cm or less, and promote the wettability of polyester films, such as alkyl trimethyl ammonium salts, dialkyl dimethyl ammonium salts, alkyl benzyl dimethyl ammonium salts, monoalkyl sulfuric acid salts, alkyl polyoxyethylene sulfuric acid salts, alkyl benzene sulfonic acid salts, monoalkyl phosphoric acid salts, alkyl dimethyl amine oxide, alkyl carboxy betaine, polyoxyethylene alkyl ether, fatty acid sorbitan ester, alkyl polyglucoside, fatty acid diethanol amide, or alkyl monoglyceryl ether, with polyether-modified silicone being particularly preferable.

The amount of the surfactant added is preferably 0.1 mass% or higher and 1.0 mass% or lower, more preferably 0.2 mass% to 0.8 mass%, based on 100 mass% of the sum of the solids contents by mass in the coating liquid. A surfactant in an amount of 0.1 mass% or higher is preferable because it can provide a wettability effect as a surfactant. A surfactant in an amount of 1.0 mass% or lower is preferable because it can maintain ready adhesion well.

A pH adjuster is also sometimes used as an additive. Acids for use in adjusting the pH include inorganic acids such as hydrochloric acid, nitric acid, and sulfuric acid, and organic acids such as oxalic acid, formic acid, citric acid, and acetic acid. For alkali adjustment, substances such as sodium carbonate, sodium hydrogen carbonate, and sodium phosphinate are used. For adjustment of water-based coating materials, a neutral pH, such as a pH of 5 to 9, is preferable; it is more preferred to adjust the pH to preferably 6 to 8.5. A pH of 5 or lower may lead to corrosion of coating machines and may also result in a decreased effect of promoting de-blocking of the blocking agent when a blocked isocyanate is selected as a crosslinking agent. A pH of 9 or higher is also not preferable because it causes hydrolysis of resins for use as a resin binder such as polyester resin and thereby impairs adhesiveness and durability.

To reduce the glossiness of the surface of the readily adhesive layer, the readily adhesive layer may also contain inert particles.

The readily adhesive layer may also contain lubricant particles to impart slipperiness, matted texture, or inkabsorbing properties to the surface. The particles may be inorganic particles or organic particles. Although they are not particularly limited thereto, lubricant particles include (1) inorganic particles such as silica, kaolinite, talc, light calcium carbonate, heavy calcium carbonate, zeolite, alumina, barium sulfate, carbon black, zinc oxide, zinc sulfate, zinc carbonate, zirconium oxide, titanium dioxide, aluminum silicate, diatomaceous earth, calcium silicate, aluminum hydroxide, calcium carbonate, magnesium carbonate, calcium phosphate, magnesium hydroxide, and barium sulfate, and (2) organic particles such as acrylic or methacrylic particles, vinyl chloride particles, vinyl acetate particles, nylon particles, styrene/acrylic particles, styrene/butadiene particles, polystyrene/acrylic particles, polystyrene/isoprene particles, polystyrene/isoprene particles, methyl methacrylate/butyl methacrylate particles, melamine particles, polycarbonate particles, urea particles, epoxy particles, urethane particles, phenol particles, diallyl phthalate particles, and polyester particles. To impart moderate slipperiness to the readily adhesive layer, silica is particularly preferably used.

The average particle size of inert particles is preferably 0.1 to 2.4 um, and more preferably 0.3 to 2.0 µm. If the average particle size of inert particles is 0.04 µm or less, the glossiness on the film surface may increase. On the other hand, if the average particle size of inert particles exceeds 2.4 um, the particles tend to drop out of the readily adhesive layer, resulting in powder falling in the operation steps such as film feeding.

The average particle size can be determined as a result of microscopic morphology observation using a scanning electron microscope or transmission electron microscope. Specifically, the average diameter of 20 particles arbitrarily selected in the microscopic observation is used. The shape of the particles is not particularly limited as long as it satisfies the object of the present invention, and spherical particles and non-spherical particles having an irregular shape can be used. The particle size of particles having an irregular shape can be calculated as an equivalent circle diameter. The equivalent circle diameter is a value determined by dividing the area of the observed particles by π to calculate the square root, and multiplying the result by 2.

If increased glossiness of the surface of the readily adhesive layer is desired, it is preferred that the readily adhesive layer does not contain the particles.

It is also a preferred embodiment that the readily adhesive layer has irregularities on the surface by embossing in order to impart slipperiness and air ventilation against materials such as in-mold metals.

### Method for Producing Readily Adhesive Polyester Film

The method for producing the readily adhesive polyester film of the present invention can be any method and is not particularly limited. A typical method, for example, melting a mixture of the formula described above, extruding the melt in a sheet form to prepare an unstretched film, and stretching the unstretched film, can be used.

In the readily adhesive polyester film of the present invention, a thermoplastic resin that is incompatible with polyester resin may be dispersed in a polyester resin in the step of melting and extruding the film starting material for molding. In the Examples of the present invention, the polyester resin and the thermoplastic resin incompatible with polyester resin for use were those available in pellet form. However, they are not limited to these.

The starting materials to be fed into an extruder so as to be melted and molded into a film form are prepared by mixing these resins in pellet form according to the desired formula. However, when a polyester resin and a polyolefin resin, whose specific gravities greatly differ from each other, are used as the starting materials for the polyester film of the present invention, it is preferable to strive to prevent segregation in the process of feeding the mixed pellets to an extruder. A suitable method for preventing segregation may be, for example, kneading and pelletizing some or all of the starting material resins in combination to give master batch pellets beforehand. This method was used in the Examples of the present invention; however, the method is not particularly limited to this as long as the effects of the present invention are not impaired.

In extruding such a mixture of a polyester resin and a resin incompatible with a polyester resin, even after resins are mixed and finely dispersed in a molten state, the resins have nature to aggregate again due to the action of decreasing the interfacial energy of the resins. This phenomenon causes coarse dispersion of a cavity-forming agent in extrusion molding of an unstretched film and prevents the desired physical properties from being achieved.

To avoid the above phenomenon, it is preferable to finely disperse a cavity-forming agent in advance using a twinscrew extruder, which has a higher mixing effect, when a film of the mixture as described above is formed by molding. If this is difficult, it is also preferable to feed the starting material resins from an extruder to a feed block or a die through a static mixer, as an auxiliary means. The static mixer for use may be a static mixer, an orifice, or the like. However, care must be taken in performing these methods because thermally degraded resin may remain in the melt line.

The incompatible resin, once dispersed in the form of fine particles in a polyester resin, tends to aggregate again with time in the molten state under low-shear conditions. The fundamental solution for this is to reduce the retention time in the melt line from the extruder to the die. In the present invention, the retention time in the melt line is preferably 30 minutes or less, and more preferably 15 minutes or less.

The conditions for stretching and orientation of the unstretched film obtained as described above are closely related to the physical properties of the film. Below, the stretching and orientation conditions are described in view of a most commonly used sequential biaxial stretching method, in particular, a method comprising stretching an unstretched film in the longitudinal direction and then in the width direction, as an example.

In a longitudinal stretching step, a film is stretched 2.5- to 5.0-fold in the longitudinal direction on rolls heated to 80 to 120°C to obtain a uniaxially stretched film. Heating may be performed by a method that uses a heating roll, a method that uses a non-contact heating means, or a combination of these methods. Next, the uniaxially stretched film is introduced into a tenter and stretched 2.5- to 5.0-fold in the width direction at a temperature equal to or lower than Tm - 10°C. The term "Tm" as used here represents the melting point of polyester.

The above biaxially stretched film is subjected to heat treatment as necessary. The heat treatment is preferably performed in a tenter at a temperature within the range of Tm - 60°C to Tm.

The readily adhesive layer may be formed after the production of the film, or during the production process. In particular, from the viewpoint of productivity, the readily adhesive layer is preferably formed at any stage of the production process of the film; i.e., the readily adhesive layer is preferably formed by applying a coating liquid to at least one surface of an unstretched or uniaxially stretched PET film.

The coating liquid may be applied to the polyester film by using a known method. Examples of the method include reverse roll coating, gravure coating, kiss coating, die coating, roll brush coating, spray coating, air knife coating, wire bar coating, a pipe doctor method, impregnation coating, and curtain coating. These methods may be used singly or in combination in application of the coating liquid.

In the present invention, the thickness of the readily adhesive layer can be suitably adjusted within the range of 0.001 to 2.00 um. To achieve both processability and adhesiveness, the thickness of the readily adhesive layer can be adjusted within the range of preferably 0.01 to 1.00 µm, more preferably 0.02 to 0.80 µm, and still more preferably 0.05 to 0.50 um. A thickness of the readily adhesive layer being 0.001 um or more is preferable because it provides excellent adhesion. A thickness of the readily adhesive layer being 2.00 um or less is preferable because it can prevent the transfer of the antistatic agent to other items or to the back side.

### Examples

Next, the present invention is described below in more detail with reference to Examples and Comparative Examples. However, the present invention is not limited to the following Examples. First, the evaluation methods used in the present invention are explained below.

### (1) Antistatic Properties: Surface Specific Resistance Value

A film was cut out into 3 squares of 5.00-cm square and used as samples. The surface specific resistance value of the three samples was measured with a surface resistance meter (Hiresta MCP-HT800, produced by Nittoseiko Analytech Co., Ltd.) at an applied voltage of 500 V at 23°C and a humidity of 65% according to JIS K6911, and the average value was taken.

### (2) Evaluation of Transfer from Readily Adhesive Layer Surface to Other Surface under Pressure at 50°C

A film was cut out into 3 squares of 5.00-cm square and used as samples. A polyester film (E5001, produced by Toyobo Co., Ltd.; thickness: 50 µm) was superimposed on the readily adhesive layer surface of each sample. Using a dry oven (DVS602, produced by Yamato Scientific Co., Ltd.), the samples were kept at 50°C under a pressure of 1 kg/cm² for 3 days. The surface specific resistance values of the three samples were measured for the readily adhesive layer surface and the contacted surface of the Toyobo polyester film E5001 using a surface resistance meter (Hiresta MCP-HT800, produced by Nittoseiko Analytech Co., Ltd.) at an applied voltage of 500 V at 23°C and a humidity of 65% according to JIS K6911, and the average value was taken.

The readily adhesive layer surface of each sample was evaluated as follows:
A: 1.0×10¹³ Ω/sq or less
C: exceeding 1.0×10¹³ Ω/sq

The contacted surface of E5001 was evaluated as follows:
A: 1.0×10¹⁴ Ω/sq or more
C: less than 1.0×10¹⁴ Ω/sq

### (3) Evaluation of Transfer from Readily Adhesive Layer Surface to Other Surface under Pressure in Moist-Heat Environment

A film was cut out into 3 squares of 5-cm square and used as samples. A polyester film (E5001, produced by Toyobo Co., Ltd.; thickness: 50 pm) was superimposed on the readily adhesive layer surface of each sample. Using a constant temperature and humidity chamber (IG400, produced by Yamato Scientific Co., Ltd.), the samples were kept at a temperature of 60°C and a humidity of 90% under a pressure of 1 kg/cm² for 2 days and 3 days. The surface specific resistance values of the three samples were measured for the surface of the readily adhesive layer and the contacted surface of the Toyobo polyester film E5001 using a surface resistance meter (Hiresta MCP-HT800, produced by Nittoseiko Analytech Co., Ltd.) at an applied voltage of 500 V at 23°C and a humidity of 65% according to JIS K6911, and the average value was taken.

As for the readily adhesive layer surface of each sample, those that were superimposed and held for 3 days were measured and evaluated as follows:
A: 1.0×10¹³ Ω/sq or less
C: exceeding 1.0×10¹³ Ω/sq

As for the contacted surface of E5001, those superimposed for 2 days and those superimposed for 3 days were measured and evaluated as follows:
A: 1.0×10¹⁴ Ω/sq or more for those superimposed for 3 days
B: less than 1.0×10¹⁴ Ω/sq for those superimposed for 3 days, and 1.0×10¹³ Ω/sq or more for those superimposed for 2 days
C: less than 1.0×10¹³ Ω/sq for those superimposed for 2 days

### (4) Adhesion to UV Ink

A print was formed on a readily adhesive layer of a readily adhesive polyester film using a UV ink (trade name: Best Cure UV161 Indigo S, produced by T&K Toka Co., Ltd.) with a printing machine (trade name: RI Tester, produced by Akira Seisakusho Co., Ltd.). Then, the film coated with the ink layer was irradiated with UV light at 40 mJ/cm² using a high-pressure mercury lamp to thereby cure the UV-curable ink. Subsequently, a Nichiban cellophane adhesive tape (CT405AP-24) was cut into a piece with a width of 24 mm and a length of 50 mm, and completely adhered to the ink layer surface with a handy rubber roller so as not to allow air to enter the ink layer surface. The cellophane adhesive tape was then vertically peeled off, and the area with the remaining printing layer was observed in the region of 24 mm × 50 mm and evaluated according to the following criteria.
A: An area with the remaining printing layer of 99% or more of the total region was assessed as acceptable.
B: An area with the remaining printing layer of 90% or more but less than 99% of the total region was assessed as acceptable.
C: An area with the remaining printing layer of less than 90% of the total region was assessed as unacceptable.

### (5) Adhesion to Water-Based Flexographic Ink

A print was formed on a readily adhesive layer of a readily adhesive polyester film using a water-based flexographic ink for surface printing (trade name: Hydric FCG, produced by Dainichiseika Color & Chemicals Mfg. Co., Ltd.) with a printing machine (trade name: K Printing Proofer, produced by Matsuo Sangyo Co., Ltd.) using a 150-line metal plate. Then, the ink layer was cured by heating in a dryer oven at 100°C for 30 seconds. Subsequently, a Nichiban cellophane adhesive tape (CT405AP-24) was cut into a piece with a width of 24 mm and a length of 50 mm, and completely adhered to the ink layer surface with a handy rubber roller so as not to allow air to enter the ink layer surface. The cellophane adhesive tape was then vertically peeled off, and the area with the remaining printing layer was observed in the region of 24 mm × 50 mm and evaluated according to the following criteria.
A: An area with the remaining printing layer of 99% or more of the total region was assessed as acceptable.
B: An area with the remaining printing layer of 90% or more but less than 99% of the total region was assessed as acceptable.
C: An area with the remaining printing layer of less than 90% of the total region was assessed as unacceptable.

### (6) Adhesion to Solvent-Curable Ink

A screen ink (trade name: Tetron Ink 900-1 series 990 Black, produced by Jujo Chemical Co., Ltd.) was diluted with a dilution solvent (trade name: Tetron Standard Solvent, produced by Jujo Chemical Co., Ltd.) so that Tetron Ink:Tetron Standard Solvent = 4:1. The diluted ink was applied to a readily adhesive layer on one side of a readily adhesive polyester film by using a 250-mesh screen and a squeegee. After application of the ink, the ink was dried and cured at 90°C for 5 minutes using a dry oven (DVS602, produced by Yamato Scientific Co., Ltd.). Subsequently, a Nichiban cellophane adhesive tape (CT405AP-24) was cut into a piece with a width of 24 mm and a length of 50 mm, and completely adhered to the ink layer surface with a handy rubber roller so as not to allow air to enter the ink layer surface. The cellophane adhesive tape was then vertically peeled off, and the area with the remaining printing layer was observed in the region of 24 mm × 50 mm and evaluated according to the following criteria.
A: An area with the remaining printing layer of 99% or more of the total region was assessed as acceptable.
B: An area with the remaining printing layer of 90% or more but less than 99% of the total region was assessed as acceptable.
C: An area with the remaining printing layer of less than 90% of the total region was assessed as unacceptable.

### (7) Adhesion to Oxidative Polymerization-Type Ink

A print was formed on a readily adhesive layer on one side of a readily adhesive polyester film using an oxidative polymerization-type offset ink (trade name: TSP400 G Black, produced by Toyo Ink Co., Ltd.) with a printing machine (trade name: RI Tester, produced by Akira Seisakusho Co., Ltd.). Subsequently, a Nichiban cellophane adhesive tape (CT405AP-24) was cut into a piece with a width of 24 mm and a length of 50 mm, and completely adhered to the ink layer surface with a handy rubber roller so as not to allow air to enter the ink layer surface. The cellophane adhesive tape was then vertically peeled off, and the area with the remaining printing layer was observed in the region of 24 mm × 50 mm and evaluated according to the following criteria.
A: An area with the remaining printing layer of 99% or more of the total region was assessed as acceptable.
B: An area with the remaining printing layer of 90% or more but less than 99% of the total region was assessed as acceptable.
C: An area with the remaining printing layer of less than 90% of the total region was assessed as unacceptable.

### (8) Adhesion to Melt-Type Thermal Transfer Ink

A one-dimensional bar code with any JAN code was printed on a readily adhesive layer on one side of a readily adhesive polyester film using a thermal transfer printer (Scantronics CL4NX-J, produced by Sato Holdings Corporation) with a thermal transfer ribbon B110C ink (produced by Ricoh Co., Ltd.) at a printing speed of 6 inches/second. Subsequently, a Nichiban cellophane adhesive tape (CT405AP-24) was cut into a piece with a width of 24 mm and a length of 50 mm, and completely adhered to the ink layer surface with a handy rubber roller so as not to allow air to enter the ink layer surface. The cellophane adhesive tape was then vertically peeled off, and the printing layer was observed in the region of 24 mm × 50 mm and determined according to the following criteria.
A: The bar code fine line-printed part was not peeled off.
B: The bar code fine line-printed part was partially peeled off.
C: The bar code fine line-printed part was entirely peeled off.

### (9) In-Mold Adhesion

A readily adhesive polyester film was cut into 10 cm × 15 cm pieces and fixed to one of the blow-molding split molds using a vacuum so that the readily adhesive layer on one side was in contact with the mold, and the readily adhesive layer on the other side faced a resin-molded layer side. Then, polyethylene terephthalate (trade name: UniPet (registered trademark), produced by Japan Unipet Company, melting point: 230°C) was melted and extruded at 280°C to obtain a parison. The parison was then introduced between the split molds, the split molds were tightened, and 0.5 MPa pressurized air was supplied into the parison to inflate the parison and form a container shape, which was thermally bonded to a readily adhesive polyester film for in-mold labeling. The molds were cooled to 25°C. A resin container with a capacity of 500 ml, to which the readily adhesive polyester film for in-mold molding was adhered, was obtained. No shrinkage or deformation of the readily adhesive polyester film adhered to the resin container was observed, and the adhesion to the molded container was determined based on the following criteria.

The test was performed by hand-peeling the four corners of the readily adhesive film.
A: The film was adhered to the molded container and was not peeled off, or the film or bottle was cohesively broken.
B: The film was adhered to the molded container, but a breakdown occurred to cause peeling.
C: The film was not adhered to the molded container.

### (10) Moist-Heat Resistant Easy Adhesion Test

The samples obtained in the test in section (9) above were stored in a constant temperature and humidity chamber (IG400, produced by Yamato Scientific Co., Ltd.) for 3 days at a temperature of 60°C and a humidity of 90%, and the adhesion to a molded article was determined according to the following criteria.
A: The sample was adhered to the molded container and was not peeled off.
B: The sample was adhered to the molded container, but was peeled off.
C: The sample was removed and peeled off from the molded container.

### (11) Water-Resistant Adhesion Test

The samples obtained in the test in section (9) above were immersed in room-temperature tap water for 7 days, and the adhesion to a molded article was determined according to the following criteria.
A: The sample was adhered to the molded container and was not peeled off.
B: The sample was adhered to the molded container, but was peeled off.
C: The sample was removed and peeled off from the molded container.

### (12) Mold Whitening Test

A SUS304 metal plate on a readily adhesive layer side of a readily adhesive film for in-mold molding was heated at 100°C and subjected to a load of 0.15 kg/cm² for 1 minute using a hot plate (TH-450, produced by Toyo Seisakusho Kaisha, Ltd.). Then, peeling was performed, and whitening stains on the SUS304 metal surface were visually determined according to the following criteria.
A: No whitening stains were observed on the SUS304 metal plate surface.
C: Whitening stains were observed on the SUS304 metal plate surface.

### Cationic Antistatic Agent A-1

Using 116 g of N,N-dimethyl-1,3-propanediamine and 285 g of C₁₇ stearic acid, an esterification reaction was performed at 100°C in a nitrogen atmosphere for 10 hours. Tetrahydrofuran was added as a quaternization solvent. A predetermined amount of dimethyl sulfate was added to the target amine, and the resulting mixture was allowed to react at 70°C for about 10 hours. After the reaction, the solvent was removed by distillation under reduced pressure, and isopropanol was added to adjust the resulting mixture to a desired solids content. An isopropanol solution of a cationic antistatic agent (A-1) containing a quaternary ammonium ethosulfate salt was thus obtained.

### Cationic Antistatic Agent A-2

Procedures were performed as in the preparation of A-1, except that 89 g of dimethylaminoethanol and 228 g of C₁₄ myristic acid were used. A solution of a cationic antistatic agent (A-2) containing a quaternary ammonium ethosulfate salt was thus obtained.

### Cationic Antistatic Agent A-3

Procedures were performed as in the preparation of A-1, except that using 89 g of dimethylaminoethanol and 354 g of C₂₃ tricosylic acid, an esterification reaction was performed at 200°C in a nitrogen atmosphere for 10 hours, tetrahydrofuran was added as a quaternization solvent, a predetermined amount of dimethyl sulfate was added to the target amine, and the resulting mixture was allowed to react at 70°C for about 10 hours. An isopropanol solution of a cationic antistatic agent (A-3) containing a quaternary ammonium ethosulfate salt was thus obtained.

### Anionic Antistatic Agent A-4

Dodecylbenzenesulfonic acid sodium salt (TB702, produced by Matsumoto Yushi-Seiyaku Co., Ltd.) was used.

### Quaternary Cation Chlorine-Based Antistatic Agent A-5

Lauryltrimethylammonium chloride (Catiogen (registered trademark) TML, produced by DKS Co. Ltd.) was used.

### Polymerization of Urethane Resin Having Polycarbonate Structure B-1

22 parts by mass of 4,4-dicyclohexylmethane diisocyanate, 20 parts by mass of polyethylene glycol monomethyl ether with an average molecular weight of 700, 53 parts by mass of polyhexamethylene carbonate diol with an average molecular weight of 2100, 5 parts by mass of neopentyl glycol, and 84.00 parts by mass of acetone as a solvent were placed into a four-necked flask equipped with a stirrer, a Dimroth condenser, a nitrogen introduction tube, a silica gel drying tube, and a thermometer. The resulting mixture was stirred at 75°C in a nitrogen atmosphere for 3 hours, and the reaction mixture was confirmed to have reached a predetermined amine equivalent. Subsequently, 16 parts by mass of a polyisocyanate compound having an isocyanurate structure (Duranate TPA, produced by Asahi Kasei Corporation, trifunctional) prepared using hexamethylene diisocyanate as a starting material was added. The resulting mixture was stirred at 75°C in a nitrogen atmosphere for 1 hour, and the reaction mixture was confirmed to have reached a predetermined amine equivalent. The temperature of the reaction mixture was then reduced to 50°C, and 7 parts by mass of methyl ethyl ketoxime was added dropwise. After the temperature of this reaction mixture was reduced to 40°C, a polyurethane prepolymer solution was obtained. Next, 450 g of water was added to a reaction vessel equipped with a homodisper capable of high-speed stirring, and the temperature was adjusted to 25°C. The polyurethane prepolymer solution was added thereto while mixing with stirring at 2000 min⁻¹ to obtain an aqueous dispersion. Acetone and a portion of water were then removed under reduced pressure. A solution of water-dispersible urethane resin (B-1) with a solids content of 35 mass% was thus obtained.

### Polymerization of Urethane Resin Having Polycarbonate Structure B-2

25 parts by mass of 4,4-dicyclohexylmethane diisocyanate, 5 parts by mass of dimethylolpropanoic acid, 52 parts by mass of polyhexamethylene carbonate diol with an average molecular weight of 2600, 6 parts by mass of neopentyl glycol, and 84.00 parts by mass of acetone as a solvent were placed into a four-necked flask equipped with a stirrer, a Dimroth condenser, a nitrogen introduction tube, a silica gel drying tube, and a thermometer. The resulting mixture was stirred at 75°C in a nitrogen atmosphere for 3 hours, and the reaction mixture was confirmed to have reached a predetermined amine equivalent. Subsequently, 18 parts by mass of a polyisocyanate compound having an isocyanurate structure (Duranate TPA, produced by Asahi Kasei Corporation, trifunctional) prepared using hexamethylene diisocyanate as a starting material was added. The resulting mixture was stirred at 75°C in a nitrogen atmosphere for 1 hour, and the reaction mixture was confirmed to have reached a predetermined amine equivalent. The temperature of the reaction mixture was then reduced to 50°C, and 8 parts by mass of methyl ethyl ketoxime was added dropwise. After the temperature of this reaction mixture was reduced to 40°C, 5.17 parts by mass of triethylamine was added, and a polyurethane prepolymer solution was obtained. Next, 450 g of water was added to a reaction vessel equipped with a homodisper capable of high-speed stirring, and the temperature was adjusted to 25°C. The polyurethane prepolymer solution was added thereto while mixing with stirring at 2000 min⁻¹ to obtain an aqueous dispersion. Acetone and a portion of water were then removed under reduced pressure. A solution of water-dispersible urethane resin (B-2) with a solids content of 35 mass% was thus obtained.

### Polymerization of Urethane Resin Not Containing Polycarbonate Polyol Component B-3

75 parts by mass of polyester polyol containing terephthalic acid, isophthalic acid, ethylene glycol, and neopentyl glycol as constituents and having a molecular weight of 5000, 30 parts by mass of hydrogenated m-xylylene diisocyanate, 7 parts by mass of ethylene glycol, 6 parts by mass of dimethylolpropionic acid, and 84.00 parts by mass of acetone as a solvent were placed in a reaction vessel. The resulting mixture was stirred at 75°C in a nitrogen atmosphere for 3 hours, and the reaction mixture was confirmed to have reached a predetermined amine equivalent. After the temperature of this reaction mixture was reduced to 40°C, 5.17 parts by mass of triethylamine was added, and a polyurethane prepolymer solution was obtained. Next, 450 g of water was added to a reaction vessel equipped with a homodisper capable of high-speed stirring and the temperature was adjusted to 25°C. The polyurethane prepolymer solution was added thereto while mixing with stirring at 2000 min⁻¹ to obtain an aqueous dispersion. Acetone and a portion of water were then removed under reduced pressure. A solution of water-dispersible urethane resin (B-3) with a solids content of 35 mass% was thus obtained.

### Preparation of Polyurethane Blocked Isocyanate Having Polyester Structure (B-4)

After 33.6 parts by mass of hexamethylene diisocyanate was added to 200 parts by mass of a polyester (molecular weight: 2000) of a 2-mol ethylene oxide adduct of bisphenol A and maleic acid, a reaction was allowed to proceed at 100°C for 2 hours. Subsequently, the temperature of the reaction system was once reduced to 50°C, and 73 parts by mass of an aqueous 30% sodium bisulfite solution was added. The resulting mixture was stirred at 45°C for 60 minutes, and then diluted with 718 parts by mass of water, thus obtaining an aqueous dispersion of blocked polyisocyanate (B-4) with a solids content of 20.0 mass%. The blocked isocyanate crosslinking agent had two functional groups, and an NCO equivalent of 1300.

### Polymerization of Blocked Isocyanate Crosslinking Agent C-1

In a flask equipped with a stirrer, a thermometer, and a reflux condenser, 95 parts by mass of 3,5-dimethylpyrazole (dissociation temperature: 120°C, boiling point: 218°C) was added dropwise to 66.04 parts by mass of a polyisocyanate compound having an isocyanurate structure (Duranate TPA, produced by Asahi Kasei Corporation) prepared using hexamethylene diisocyanate as a starting material, and 17.50 parts by mass of N-methylpyrrolidone. The resulting mixture was held in a nitrogen atmosphere at 70°C for 1 hour. Then, 30 parts by mass of dimethylolpropanoic acid was added dropwise. After the infrared spectrum of the reaction mixture was measured to confirm that the absorption of the isocyanate group had disappeared, 5.59 parts by mass of N,N-dimethylethanolamine and 132.5 parts by mass of water were added, thus obtaining an aqueous dispersion of blocked polyisocyanate (C-1) with a solids content of 40 mass%. The blocked isocyanate crosslinking agent had four functional groups, and an NCO equivalent of 280.

### Polymerization of Blocked Isocyanate Crosslinking Agent C-2

100 parts by mass of a polyisocyanate compound having an isocyanurate structure (Duranate TPA, produced by Asahi Kasei Corporation) prepared using hexamethylene diisocyanate as a starting material, 55 parts by mass of propylene glycol monomethyl ether acetate, and 30 parts by mass of polyethylene glycol monomethyl ether (average molecular weight: 750) were placed in a flask equipped with a stirrer, a thermometer, and a reflux condenser. The resulting mixture was held in a nitrogen atmosphere at 70°C for 4 hours. The temperature of the reaction mixture was then reduced to 50°C, and 47 parts by mass of methyl ethyl ketoxime was added dropwise. The infrared spectrum of the reaction mixture was measured to confirm that the absorption of the isocyanate group had disappeared, and 210 parts by mass of water was added, thus obtaining an aqueous dispersion of an oxime blocked isocyanate crosslinking agent (C-2) with a solids content of 40 mass%. The blocked isocyanate crosslinking agent had three functional groups, and an NCO equivalent of 170.

### Polymerization of Polyester Resin D-1

194.2 parts by mass of dimethyl terephthalate, 184.5 parts by mass of dimethyl isophthalate, 14.8 parts by mass of dimethyl-5-sodium sulfoisophthalate, 185 parts by mass of neopentyl glycol, 188 parts by mass of ethylene glycol, and 0.2 parts by mass of tetra-n-butyl titanate were placed in a stainless steel autoclave equipped with a stirrer, a thermometer, and a partial reflux condenser. A transesterification reaction was performed at a temperature of 160 to 220°C for 4 hours. Subsequently, the temperature was raised to 255°C, and the pressure of the reaction system was gradually reduced; and then a reaction was performed at a reduced pressure of 30 Pa for one hour and a half, thus obtaining a copolyester resin (D-1). The obtained copolyester resin (D-1) was pale yellow and transparent. The reduced viscosity of the copolyester resin (D-1) was measured to be 0.40 dl/g. The glass transition temperature as measured by DSC was 65°C.

### Preparation of Aqueous Polyester Dispersion Dw-1

25 parts by mass of the copolyester resin (D-1) and 10 parts by mass of ethylene glycol n-butyl ether were placed in a reactor equipped with a stirrer, a thermometer, and a reflux condenser. The resulting mixture was heated at 110°C and stirred to dissolve the resin. After the resin was completely dissolved, 65 parts by mass of water was gradually added to the polyester solution while stirring. After the addition, the resulting liquid was cooled to room temperature while stirring. A milky-white aqueous polyester dispersion (Dw-1) with a solids content of 25 mass% was thus obtained.

### Polymerization of Polyester Resin D-2

194.2 parts by mass of dimethyl terephthalate, 184.5 parts by mass of dimethyl isophthalate, 14.8 parts by mass of dimethyl-5-sodium sulfoisophthalate, 233.5 parts by mass of diethylene glycol, 136.6 parts by mass of ethylene glycol, and 0.2 parts by mass of tetra-n-butyl titanate were placed in a stainless steel autoclave equipped with a stirrer, a thermometer, and a partial reflux condenser. A transesterification reaction was performed at a temperature of 160 to 220°C for 4 hours. Subsequently, the temperature was raised to 255°C, and the pressure of the reaction system was gradually reduced; and then a reaction was performed at a reduced pressure of 30 Pa for one hour and a half, thus obtaining a copolyester resin (D-2). The obtained copolyester resin (D-2) was pale yellow and transparent. The reduced viscosity of the copolyester resin (D-2) was measured to be 0.70 dl/g. The glass transition temperature as measured by DSC was 40°C.

### Preparation of Aqueous Polyester Dispersion Dw-2

25 parts by mass of the copolyester resin (D-2) and 10 parts by mass of ethylene glycol n-butyl ether were placed in a reactor equipped with a stirrer, a thermometer, and a reflux condenser. The resulting mixture was heated at 110°C and stirred to dissolve the resin. After the resin was completely dissolved, 65 parts by mass of water was gradually added to the polyester solution while stirring. After the addition, the resulting liquid was cooled to room temperature while stirring. A milky-white aqueous polyester dispersion (Dw-2) with a solids content of 25 mass% was thus obtained.

### Example 1

The solids contents of compounds forming a coating layer are as shown below.

The total solids content in the coating layer is taken as 100 mass%.
- Cationic antistatic agent A-1: 6.2 mass%
- Urethane resin having a polycarbonate structure B-1: 22.8 mass%
- Blocked isocyanate crosslinking agent C-1: 22.8 mass%
- Polyester resin D-1: 45.4 mass%
- Silicone-based surfactant: 0.4 mass%
- pH adjuster (sodium hydrogen carbonate): 2.4 mass%

The mass ratio of urethane resin (B-1)/crosslinking agent (C-1)/polyester resin (D-1) based on solids content is 25/25/50.

### (1) Production of White Cavity-Containing Polyester Film (F-1) Preparation of Master Pellet

60 mass% of a polymethylpentene resin with a melt viscosity (ηₒ) of 1,300 poise (DX820, produced by Mitsui Chemicals, Inc.), 20 mass% of a polystyrene resin with a melt viscosity (ηₛ) of 3,900 poise (G797N, produced by Japan Polystyrene Inc.), and 20 mass% of a polypropylene resin with a melt viscosity of 2,000 poise (J104WC, produced by Grand Polymer) were mixed in pellet form. The resulting mixture was fed into a vented twin-screw extruder whose temperature had been adjusted to 285°C, and pre-kneaded. This molten resin was continuously fed into a vented single-screw extruder, kneaded, and extruded. The resulting strand was cooled and cut to prepare a master pellet (M1) as a cavity-forming agent.

A mixture of 50 mass% of a polyethylene terephthalate resin with an intrinsic viscosity of 0.62 dl/g produced by a known method and 50 mass% of anatase titanium dioxide particles with an average particle size of 0.3 µm (TA-300, produced by Fuji Titanium Industry Co., Ltd.) was fed into a vented twin-screw extruder, and pre-kneaded. This molten resin was continuously fed into a vented single-screw kneader, kneaded, and extruded. The resulting strand was cooled and cut to prepare a master pellet containing titanium dioxide (M2).

### Preparation of Film Starting Material

81 mass% of the polyethylene terephthalate resin with an intrinsic viscosity of 0.62 dl/g having been dried in vacuum at 140°C for 8 hours, 9 mass% of the master pellet (M1) having been dried in vacuum at 90°C for 4 hours, and 10 mass% of the master pellet (M2-A) were mixed in pellet form to obtain a film starting material (G1).

### Preparation of Unstretched Film

The film starting material (G1) was fed into an extruder for layer B, whose temperature had been adjusted to 285°C. Separately, a mixture of 70 mass% of the same polyethylene terephthalate resin as that used for the preparation of the film starting material (G1), and 30 mass% of the master pellet (M2) was fed into an extruder for layer A, whose temperature had been adjusted to 290°C. The molten resin discharged from the extruder for layer B was guided to a feed block through an orifice, and the resin discharged from the extruder for layer A was guided to the feed block through a static mixer. A layer formed of the film starting material (G1) (layer B) and a layer formed of the polyethylene terephthalate resin and the master pellet (M2) (layer A) were laminated in the order of layer A, layer B, and layer A.

The molten resins were coextruded in a sheet form from a T-die onto a cooling roll, whose temperature had been adjusted to 25°C, and adhered to and solidified on the roll by electrostatic application to form an unstretched film having a thickness of 510 um. The discharge amount of each extruder was adjusted so that the thickness ratio of the layers was 1:8:1. The molten resins were retained in the melt line for about 12 minutes, and the shear rate obtained from the T-die was about 150/sec.

### Preparation of Biaxially Stretched Film

The resulting unstretched film was uniformly heated to 65°C using a heating roll, and stretched 3.4 times in the longitudinal direction between two pairs of nip rolls having different peripheral speeds (low-speed rolls: 2 m/min, high-speed rolls: 6.8 m/min). As auxiliary heaters for the film, infrared heaters equipped with a metal reflective film (rated output: 20 W/cm) were disposed in the middle of the nip rolls so that the heaters faced both surfaces of the film at a position 1 cm from the film surface, and the film was thus heated. On one surface of the uniaxially stretched film obtained in this manner, the coating liquid was applied by reverse gravure coating so that the WET coating amount was 7 g/m² using the above coating structure. Then, the resulting film was guided to a tenter, heated to 150°C while drying, and stretched 3.7 times in the transverse direction. With the width fixed, the film was heated at 220°C for 5 seconds, and further relaxed by 4% at 200°C in the width direction, thus obtaining a readily adhesive polyester film having a thickness of 50 um. This film had excellent whiteness, and due to the formation of cavities, the apparent density was 1.10 g/cm³ and the optical density was 0.8. Thus, a readily adhesive polyester film having a coating layer thickness after drying of 0.12 g/m² was obtained. Tables 1 and 2 show the evaluation results.

### Examples 2 to 26

Readily adhesive polyester films were obtained in the same manner as in Example 1, except that the coating layer structure was changed as shown in Table 1.

### Example 27

The solids contents of compounds forming a coating layer are as shown below.

The total solids content in the coating layer is taken as 100 mass%.
- Colloidal silica particles (E-1) (average particle size: 450 nm): 48.8 mass%
- Cationic antistatic agent A-1: 2.1 mass%
- Urethane resin having a polycarbonate structure B-1: 12.2 mass%
- Blocked isocyanate crosslinking agent C-1: 12.2 mass%
- Polyester resin D-1: 24.4 mass%
- Silicone-based surfactant: 0.1 mass%
- pH adjuster (sodium hydrogen carbonate): 0.2 mass%

The mass ratio of urethane resin (B-1)/crosslinking agent (C-1)/polyester resin (D-1) is 25/25/50.

A readily adhesive polyester film having a coating layer thickness after drying of 0.55 g/m² was obtained in the same manner as in Example 1, except that the above coating layer structure was used and the WET coating amount was changed to 10 g/m². The resulting coating layer was matte and had a gloss value of 9.0 at 60 degree specular reflection on the coating layer surface.

### Example 28

The solids contents of compounds forming a coating layer are as shown below.

The total solids content in the coating layer is taken as 100 mass%.
- Benzoguanamine particles (E-2) (average particle size: 1.2 µm): 38.3 mass%
- Cationic antistatic agent A-1: 2.1 mass%
- Urethane resin having a polycarbonate structure B-1: 14.8 mass%
- Blocked isocyanate crosslinking agent C-1: 14.8 mass%
- Polyester resin D-1: 29.6 mass%
- Silicone-based surfactant: 0.1 mass%
- pH adjuster (sodium hydrogen carbonate): 0.3 mass%

The mass ratio of urethane resin (B-1)/crosslinking agent (C-1)/polyester resin (D-1) is 25/25/50.

A readily adhesive polyester film having a coating layer thickness after drying of 0.93 g/m² was obtained in the same manner as in Example 1, except that the above coating layer structure was used and the WET coating amount was changed to 12 g/m². The resulting coating layer was matte and had a gloss value of 14.0 at 60 degree specular reflection on the coating layer surface.

### Example 29

A readily adhesive polyester film was obtained in the same manner as in Example 27, except that the coating layer structure was changed as shown in Table 1.

### Example 30

A readily adhesive polyester film was obtained in the same manner as in Example 28, except that the coating layer structure was changed as shown in Table 1.

### Example 31

The solids contents of compounds forming a coating layer are as shown below.

The total solids content in the coating layer is taken as 100 mass%.
- Colloidal silica particles E-3 (average particle size: 100 nm): 1.6 mass%
- Cationic antistatic agent A-1: 6.2 mass%
- Urethane resin having a polycarbonate structure B-1: 25.3 mass%
- Blocked isocyanate crosslinking agent C-2: 10.8 mass%
- Polyester resin D-1: 54.2 mass%
- Silicone-based surfactant: 0.4 mass%
- pH adjuster: 1.6 mass% (sodium hydrogen carbonate)

The mass ratio of urethane resin (B-1)/crosslinking agent (C-2)/polyester resin (D-1) is 28/12/60.

### (2) Production of Polyester Film Substantially Free of Particles (F-2)

As a film starting material polymer, PET resin pellets having an intrinsic viscosity (solvent: phenol/tetrachloroethane = 60/40) of 0.62 dl/g and substantially free of particles were dried under reduced pressure at 133 Pa at 135°C for 6 hours. The dried pellets were then fed into an extruder, melted and extruded in a sheet form at about 280°C, and rapidly cooled and solidified on a rotating cooling metal roll whose surface temperature was maintained at 20°C, thus obtaining an unstretched PET sheet.

The unstretched PET sheet was heated to 100°C with heated rolls and an infrared heater, and then stretched 3.5 times in the longitudinal direction with rolls having different peripheral speeds, thus obtaining a uniaxially stretched PET film. Next, a coating liquid composition according to the above solids content was applied by reverse gravure coating so that the WET coating amount was 7 g/m². Then, the resulting film was guided to a tenter, heated to 150°C while drying, and stretched 3.7 times in the transverse direction. With the width fixed, the film was heated at 220°C for 5 seconds, and further relaxed by 4% at 200°C in the width direction, thus obtaining a readily adhesive polyester film having a film thickness of 50 um. This film had excellent transparency, the apparent specific gravity was 1.42 g/cm³, and the total light transmittance was 91%. Thus, a readily adhesive polyester film having a coating layer thickness after drying of 0.12 g/m² was obtained.

### Comparative Examples 1 to 7

Polyester films were obtained in the same manner as in Example 1, except that the coating layer structure was changed as shown in Table 1.

**Table 1**

| | | Polyester film substrate | Antistatic agent | Polyurethane resin | Crosslinking agent | Polyester resin | Fine particles | Coating thickness after drying (g/m²) | Solids content in composition for forming readily adhesive layer (mass%) | | | | | | | | Resin ratio (mass%) (shown as 100 mass% of the total solids content of the following three components) | | |
|---|---|---|---|---|---|---|---|---|---|---|---|---|---|---|---|---|---|---|---|
| | | | | | | | | | | | | | | | | | | | |
| | | | | | | | | | Antistatic agent | Polyurethane resin | Crosslinking agent | Polyester resin | Surfactant | pH adjuster | Fine particles | Total | Polyurethane resin | Crosslinking agent | Polyeater resin |
| | 1 | F-1 | A-1 | B-1 | C-1 | D-1 | None | 0.12 | 6.2 | 23 | 23 | 45 | 0.4 | 2.4 | - | 100 | 25 | 25 | 50 |
| | 2 | F-1 | A-1 | B-1 | C-2 | D-1 | None | 0.12 | 6.2 | 26 | 11 | 55 | 0.4 | 2.4 | - | 100 | 28 | 12 | 60 |
| | 3 | F-1 | A-1 | B-1 | C-2 | D-1 | None | 0.12 | 6.2 | 20 | 11 | 55 | 0.4 | 2.4 | - | 100 | 20 | 12 | 60 |
| | 4 | F-1 | A-1 | B-1 | C-2 | D-1 | None | 0.12 | 6.2 | 26 | 11 | 55 | 0.4 | 2.4 | - | 100 | 28 | 12 | 60 |
| | 5 | F-1 | A-1 | B-1 | C-2 | D-1 | None | 0.12 | 6.2 | 19 | 8.1 | 64 | 0.4 | 2.4 | - | 100 | 21 | 9 | 70 |
| | 6 | F-1 | A-1 | B-1 | C-2 | D-1 | None | 0.12 | 6.2 | 45 | 19 | 27 | 0.4 | 2.4 | - | 100 | 49 | 21 | 30 |
| | 7 | F-1 | A-1 | B-2 | C-1 | D-1 | None | 0.12 | 6.2 | 23 | 23 | 45 | 0.4 | 2.4 | - | 100 | 25 | 26 | 60 |
| | 8 | F-1 | A-1 | B-2 | C-2 | D-1 | None | 0.12 | 6.2 | 26 | 11 | 65 | 0.4 | 2.4 | - | 100 | 28 | 12 | 60 |
| | 9 | F-1 | A-2 | B-1 | C-1 | D-1 | None | 0.12 | 6.2 | 23 | 23 | 45 | 0.4 | 2.4 | - | 100 | 25 | 25 | 50 |
| | 10 | F-1 | A-2 | B-1 | C-2 | D-1 | None | 0.12 | 6.2 | 26 | 11 | 55 | 0.4 | 2.4 | - | 100 | 28 | 12 | 60 |
| | 11 | F-1 | A-2 | B-2 | C-1 | D-1 | None | 0.12 | 6.2 | 23 | 23 | 45 | 0.4 | 2.4 | - | 100 | 25 | 25 | 50 |
| | 12 | F-1 | A-2 | B-2 | C-2 | D-1 | None | 0.12 | 6.2 | 26 | 11 | 55 | 0.4 | 2.4 | - | 100 | 28 | 12 | 60 |
| | 13 | F-1 | A-3 | B-1 | C-1 | D-1 | None | 0.12 | 6.2 | 23 | 23 | 45 | 0.4 | 2.4 | - | 100 | 25 | 26 | 50 |
| | 14 | F-1 | A-3 | B-1 | C-2 | D-1 | None | 0.12 | 6.2 | 26 | 11 | 55 | 0.4 | 2.4 | - | 100 | 28 | 12 | 60 |
| | 15 | F-1 | A-3 | B-2 | C-1 | D-1 | None | 0.12 | 6.2 | 23 | 23 | 45 | 0.4 | 2.4 | - | 100 | 25 | 25 | 50 |
| Ex. | 16 | F-1 | A-3 | B-2 | C-2 | D-1 | None | 0.12 | 6.2 | 26 | 11 | 55 | 0.4 | 2.4 | - | 100 | 28 | 12 | 60 |
| | 17 | F-1 | A-4 | B-1 | C-1 | D-1 | None | 0.12 | 6.2 | 23 | 23 | 16 | 0.4 | 2.4 | - | 100 | 25 | 26 | 60 |
| | 18 | F-1 | A-4 | B-1 | C-2 | D-1 | None | 0.12 | 6.2 | 26 | 11 | 55 | 0.4 | 2.4 | - | 100 | 28 | 12 | 60 |
| | 19 | F-1 | A-4 | B-2 | C-1 | D-1 | None | 0.12 | 6.2 | 23 | 23 | 45 | 0.4 | 2.4 | - | 100 | 25 | 25 | 50 |
| | 20 | F-1 | A-4 | B-2 | C-2 | D-1 | None | 0.12 | 6.2 | 26 | 11 | 55 | 0.4 | 2.4 | - | 100 | 28 | 12 | 60 |
| | 21 | F-1 | A-5 | B-1 | C-1 | D-1 | None | 0.12 | 6.2 | 23 | 23 | 45 | 0.4 | 2.4 | - | 100 | 25 | 25 | 60 |
| | 22 | F-1 | A-5 | B-1 | C-2 | D-1 | None | 0.12 | 6.2 | 26 | 11 | 55 | 0.4 | 2.4 | - | 100 | 28 | 12 | 60 |
| | 23 | F-1 | A-6 | B-2 | C-1 | D-1 | None | 0.12 | 6.2 | 23 | 23 | 45 | 0.4 | 2.4 | - | 100 | 25 | 25 | 50 |
| | 24 | F-1 | A-5 | B-2 | C-2 | D-1 | None | 0.12 | 6.2 | 26 | 11 | 55 | 0.4 | 2.4 | - | 100 | 28 | 12 | 60 |
| | 25 | F-1 | A-1 | B-1 | C-2 | D-2 | None | 0.12 | 6.2 | 26 | 11 | 55 | 0.4 | 2.4 | - | 100 | 28 | 12 | 60 |
| | 26 | F-1 | A-1 | B-1 | None | D-1 | None | 0.12 | 6.2 | 36 | 0 | 55 | 0.4 | 2.4 | - | 100 | 40 | 0 | 60 |
| | 27 | F-1 | A-1 | B-1 | C-1 | D-1 | E-1 | 0.55 | 2.1 | 12 | 12 | 24 | 0.1 | 0.2 | 49 | 100 | 25 | 26 | 60 |
| | 28 | F-1 | A-1 | B-1 | C-1 | D-1 | E-2 | 0.93 | 2.1 | 16 | 16 | 30 | 0.1 | 0.3 | 36 | 100 | 28 | 26 | 60 |
| | 29 | F-1 | A-1 | B-1 | C-2 | D-1 | E-1 | 0.55 | 2.1 | 14 | 5.9 | 29 | 0.1 | 0.2 | 49 | 100 | 28 | 12 | 60 |
| | 30 | F-1 | A-1 | B-1 | C-2 | D-1 | E-2 | 0.93 | 2.1 | 17 | 7.1 | 36 | 0.1 | 0.3 | 38 | 100 | 28 | 12 | 60 |
| | 31 | F-2 | A-1 | B-1 | C-2 | D-1 | E-3 | 0.12 | 6.2 | 25 | 11 | 54 | 0.4 | 1.6 | 1.6 | 100 | 28 | 12 | 60 |
| | 1 | F-1 | None | B-1 | C-2 | D-1 | None | 0.12 | 0 | 27 | 12 | 58 | 0.4 | 2.6 | - | 100 | 28 | 12 | 60 |
| | 2 | F-1 | A-1 | None | C-2 | D-1 | None | 0.12 | 6.2 | 0 | 36 | 55 | 0.4 | 2.6 | - | 100 | 0 | 40 | 60 |
| | 3 | F-1 | A-1 | B-1 | C-2 | None | None | 0.12 | 6.2 | 64 | 27 | 0 | 0.4 | 2.6 | - | 100 | 70 | 30 | 0 |
| Comp. Ex. | 4 | F-1 | A-1 | B-3 | C-1 | D-1 | None | 0.12 | 6.2 | 23 | 23 | 45 | 0.4 | 2.4 | - | 100 | 25 | 26 | 60 |
| | 5 | F-1 | A-1 | B-3 | C-2 | D-1 | None | 0.12 | 6.2 | 26 | 11 | 65 | 0.4 | 2.4 | - | 100 | 28 | 12 | 60 |
| | 6 | F-1 | A-1 | B-4 | C-1 | D-1 | None | 0.12 | 6.2 | 23 | 23 | 45 | 0.4 | 2.4 | - | 100 | 25 | 25 | 50 |
| | 7 | F-1 | A-1 | B-4 | C-2 | D-1 | None | 0.12 | 6.2 | 26 | 11 | 55 | 0.4 | 2.4 | - | 100 | 28 | 12 | 60 |

**Table 2**

| | | Surface specific resistance value evaluation | | | | | UV-curable ink adhesion | Water-based flexographi c ink adhesion | Solvent -based ink adhesio n | Oxidative polymerizatio n-type ink adhesion | Melt-type thermal transfer ink adhesion | In-mold adhesio n | Moist-heat resistant easy adhesion test | Water-resistant adhesion test |
|---|---|---|---|---|---|---|---|---|---|---|---|---|---|---|
| | | Untreated | 50°C contact treatment | | 60°C. 90% RH contact treatment | | | | | | | | | |
| | | Readily adhesive layer surface (Ω/sq) | Readily adhesive layer surface | Other film surface | Readily adhesive layer surface | Additional film surface | | | | | | | | |
| | 1 | 2.4 × 10¹² | A | A | A | A | A | A | A | A | A | A | A | A |
| | 2 | 6.0 × 10¹⁰ | A | A | A | A | A | A | A | A | A | A | A | A |
| | 3 | 5.5 × 10¹¹ | A | A | A | A | A | A | A | A | A | A | A | A |
| | 4 | 8.3 × **10⁹** | A | A | A | A | A | A | A | A | A | A | A | A |
| | 5 | **7.1** × 10¹⁰ | A | A | A | A | A | A | A | A | A | A | A | A |
| | 6 | 5.5 × 10¹² | A | A | A | A | A | A | A | A | A | A | A | A |
| | 7 | 4.8 × 10¹² | A | A | A | A | A | A | A | A | A | A | A | A |
| | 8 | 5.5 × 10¹¹ | A | A | A | A | A | A | A | A | A | A | A | A |
| | 9 | 85 × 10¹¹ | A | A | A | A | A | A | A | A | A | A | A | A |
| | 10 | 2.8 × 10¹⁰ | A | A | A | A | A | A | A | A | A | A | A | A |
| | 11 | 1.7 × 10¹² | A | A | A | A | A | A | A | A | A | A | A | A |
| | 12 | 3.3 × 10¹¹ | A | A | A | A | A | A | A | A | A | A | A | A |
| | 13 | 2.4 × 10¹² | A | A | A | A | A | A | A | A | A | A | A | A |
| | 14 | 8.8 × 10¹⁰ | A | A | A | A | A | A | A | A | A | A | A | A |
| | 15 | 6.7 × 10¹² | A | A | A | A | A | A | A | A | A | A | A | A |
| Ex. | 16 | 8.1 × 10¹¹ | A | A | A | A | A | A | A | A | A | A | A | A |
| | 17 | 8.4 × 10¹⁰ | A | A | A | A | A | A | A | A | A | A | A | A |
| | 18 | 7.3 × 10¹⁰ | A | A | A | A | A | A | A | A | A | A | A | A |
| | 19 | 3.3 × 10¹⁰ | A | A | A | A | A | A | A | A | A | A | A | A |
| | 20 | 2.6 × 10¹⁰ | A | A | A | A | A | A | A | A | A | A | A | A |
| | 21 | 5.6 × 10¹² | A | A | A | A | A | A | A | A | A | A | A | A |
| | 22 | 3.4 × 10¹¹ | A | A | A | A | A | A | A | A | A | A | A | A |
| | 23 | 8.6 × 10¹² | A | A | A | A | A | A | A | A | A | A | A | A |
| | 24 | 2.3 × 10¹² | A | A | A | A | A | A | A | A | A | A | A | A |
| | 25 | 7.9 × 10¹⁰ | A | A | A | A | A | A | A | A | A | A | A | A |
| | 26 | 2.8 × 10¹⁰ | A | A | B | B | B | B | B | B | A | A | A | A |
| | 27 | 6.1 × 10¹¹ | A | A | A | A | A | A | A | A | A | A | A | A |
| | 28 | 4.3 × 10¹⁰ | A | A | A | A | A | A | A | A | A | A | A | A |
| | 29 | 5.0 × 10¹¹ | A | A | A | A | A | A | A | A | A | A | A | A |
| | 30 | 2.5 × 10¹⁰ | A | A | A | A | A | A | A | A | A | A | A | A |
| | 31 | 5.3 × 10¹⁰ | A | A | A | A | A | A | A | A | A | A | A | A |
| | 1 | 1.0 × 10¹⁴ or more | C | A | C | A | A | C | A | A | A | A | A | A |
| | 2 | 5.0 × 10¹³ | C | A | A | A | C | B | B | B | B | B | C | B |
| | 3 | 3.5 × 10¹³ | C | B | C | B | C | B | C | C | B | C | C | B |
| Comp. Ex. | 4 | 4.4 × 10¹² | A | A | C | C | A | A | A | A | A | C | C | B |
| | 5 | 7.2 × 10¹⁰ | A | A | C | C | A | A | A | A | A | C | C | B |
| | 6 | 85 × 10¹¹ | A | A | C | C | A | A | A | A | A | C | C | C |
| | 7 | 3.9 × 10¹⁰ | A | A | C | C | A | A | A | A | A | C | C | C |

### Industrial Applicability

The readily adhesive polyester film of the present invention has excellent mass productivity and can provide labels and stickers that exhibit excellent antistatic properties in use after storage in a moist-heat environment. Products having the labels and stickers adhered also exhibit excellent antistatic properties in use after storage in a moist-heat environment. The present invention can also provide readily adhesive polyester films and polyester films to which water-based flexographic ink is readily adhesive that exhibit fewer changes in quality of the surface of the readily adhesive layer. The readily adhesive polyester film for in-mold labeling of the present invention also has excellent mass productivity and can provide labels and stickers that exhibit excellent antistatic properties and adhesion in use after storage in a moist-heat environment and can provide readily adhesive polyester films for in-mold labeling that exhibit fewer changes in quality of the surface of the readily adhesive layer.

## Claims

1. A readily adhesive polyester film comprising
a polyester film, and
a readily adhesive layer on at least one surface of the polyester film,
wherein
the readily adhesive layer is formed of a cured composition containing an ion-conducting antistatic agent, a polyester resin, and a polycarbonate urethane resin,
a surface of the readily adhesive layer has a surface specific resistance value of 1.0×10¹³Ω/sq or lower, and
after the surface of the readily adhesive layer is brought into contact with an additional polyester film and maintained at a temperature of 50°C under a pressure of 1 kg/cm² for 3 days, a surface of the additional polyester film that is in contact with the surface of the readily adhesive layer has a surface specific resistance value of 1.0×10¹⁴ Ω/sq or higher.

2. The readily adhesive polyester film according to claim 1, wherein
after the surface of the readily adhesive layer is brought into contact with an additional polyester film and maintained at a temperature of 60°C and a humidity of 90% under a pressure of 1 kg/cm² for 3 days, the surface of the readily adhesive layer has a surface specific resistance value of 1.0×10¹³ Ω/sq or lower, and
after the surface of the readily adhesive layer is brought into contact with an additional polyester film and maintained at temperature of 60°C and a humidity of 90% under a pressure of 1 kg/cm² for 2 days, a surface of the additional polyester film that is in contact with the surface of the readily adhesive layer has a surface specific resistance value of 1.0×10¹³ Ω/sq or higher.

3. The readily adhesive polyester film according to Claim 1 or 2, wherein solids in the ion-conducting antistatic agent are present in an amount of 1 to 8 mass% based on 100 mass% of the total solids content in the composition.

4. The readily adhesive polyester film according to any one of claims 1 to 3, comprising a crosslinking agent in an amount of 0 to 50 mass% on a solids basis based on 100 mass% of the total solids content in the composition.

5. The readily adhesive polyester film according to any one of claims 1 to 4, wherein the readily adhesive polyester film is a polyester film to which a water-based flexographic ink is readily adhesive.

6. The readily adhesive polyester film according to any one of claims 1 to 5, which is for use in in-mold labeling.

7. The readily adhesive polyester film according to any one of claims 1 to 6, wherein the readily adhesive layer is thermally fused and adhered to a blow-molded container containing a thermoplastic resin in use.
